# EUROPEAN PATENT SPECIFICATION

(11) **EP 1 484 623 B1**
(45) Date of publication and mention of the grant of the patent: **26.07.2006**
(21) Application number: 04252712.7
(22) Date of filing: 11.05.2004
(51) Int. Cl.: G02B 6/00, G02F 1/13357

(54) **Light guiding plate, illumination device, and liquid crystal display device**
Lichtleiterplatte, Beleuchtungsvorrichtung und Flüssigkristallanzeige
Guide plat de lumière, dispositif d'éclairage et dispositif d'affichage à cristaux liquides

(30) Priority: 12.05.2003 JP 2003133062; 12.05.2003 JP 2003133063; 20.05.2003 JP 2003141865
(43) Date of publication of application: 08.12.2004
(73) Proprietor: ALPS ELECTRIC CO., LTD., Ota-ku Tokyo 145 (JP)
(72) Inventor: Ohizumi, Mitsuo, Tokyo 145 (JP); Kano, Mitsuru, Tokyo 145 (JP); Miyata, Hiroyasu, Tokyo 145 (JP)
(74) Representative: Kensett, John Hinton

(56) References cited:
- EP-A- 1 306 609
- EP-A- 1 424 576
- WO-A-01/11422
- WO-A-01/88430
- PATENT ABSTRACTS OF JAPAN vol. 2000, no. 09, 13 October 2000 (2000-10-13) -& JP 2000 180631 A (ENPLAS CORP), 30 June 2000 (2000-06-30)
- PATENT ABSTRACTS OF JAPAN vol. 2000, no. 19, 5 June 2001 (2001-06-05) -& JP 2001 051272 A (SEMICONDUCTOR ENERGY LAB CO LTD), 23 February 2001 (2001-02-23)
- PATENT ABSTRACTS OF JAPAN vol. 2000, no. 07, 29 September 2000 (2000-09-29) -& JP 2000 100229 A (ENPLAS CORP), 7 April 2000 (2000-04-07)

## Description

### BACKGROUND OF THE INVENTION

### 1. Field of the Invention

The present invention relates to an illumination device, a light guider, and a liquid crystal display device.

### 2. Description of the Related Art

Illumination devices, such as front lights, used for liquid crystal display devices includes a light guider and a light source arranged on the side end face of the light guider. Light introduced from the end face on the side of the light guider is reflected by prismatic shapes formed on the opposite side to the emitting face of the light guider and is emitted from the emitting face to illuminate an illuminated subject of liquid crystal panels (for example, Patent Document 1).

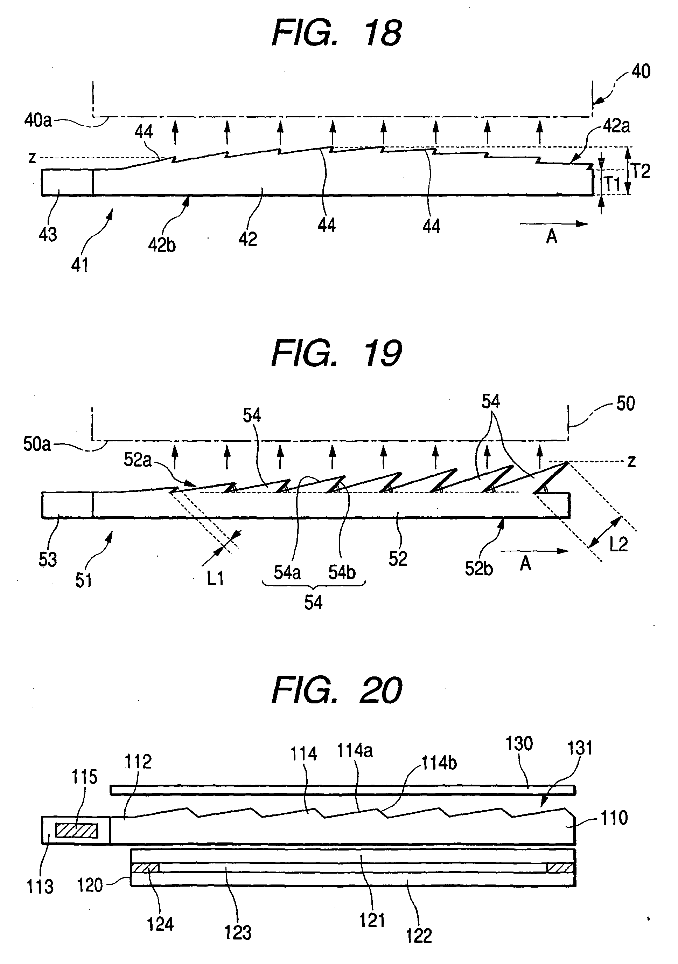

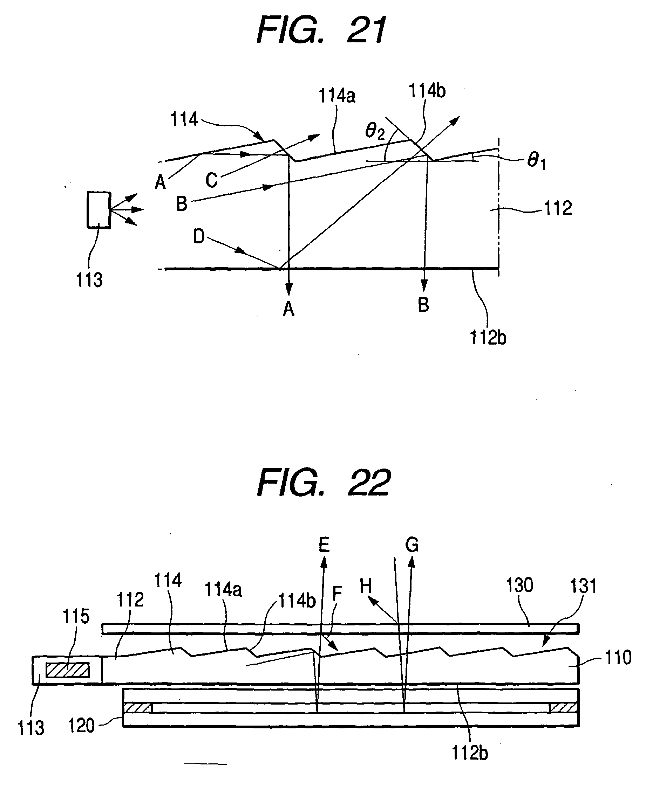

Fig. 20 illustrates the sectional structure of a liquid crystal display device including the conventional illumination devices. Figs. 21 and 22 are explanatory views for explaining the light guiding state of the front light illustrated in Fig. 20.

The liquid crystal display device illustrated in Fig. 20 includes a liquid crystal panel 120 and a front light 110 and a front light cover 130 sequentially arranged in front of (on the upper side in the drawing) the liquid crystal panel 120. In the front light 110, reference numerals 112, 113, and 115 denote a light guider, a bar light guider, and a light emission diode (LED). Projections 114 whose sections are triangular and which are composed of gentle slopes 114a and steep slope 114b are continuously formed on the light guider 112. Also, in the liquid crystal panel 120, reference numerals 121, 122, 123, and 124 denote an upper substrate, a lower substrate, a liquid crystal layer, and a sealing material. Also, in the liquid crystal panel 120, a reflecting plate (not shown) is provided on the external or internal surface of the lower substrate 122. Also; the front light cover 130 is arranged above the guider 112 in order to protect the projections 114 of the guider and is made of a transparent material and a dielectric layer. The front light cover 130 is slightly separated from the light guider 112 so that an air layer 131 is formed between the front light cover 130 and the light guider 112.

### [Patent Document 1]

Japanese Unexamined Patent Application Publication No. 11-109347

In the front light 110 illustrated in Fig. 20, as illustrated in Fig. 21, source light introduced from the bar light guider 113 on the inside of the light guider 112 propagates inside the light guider 112 while being repeatedly totally reflected. The source light incident on the steep slope 114b is mainly emitted from the emitting face 112b of the light guider 112 (the light components A and B illustrated in Fig. 21). However, even among the light components incident on the steep slope 114b similar to the light components A and B, the light components incident on the slopes at an incident angle lower than the incident angle of the light components A and B, such as the light components C and D illustrated in Fig. 21, may be transmitted through the steep slope 114b and leak to the upper side of the liquid crystal display device. This is because the incident angle of the light components C and D is larger than the critical angle between the light guider 112 and the air to be reduced. The light components C and D are not used as illumination light, thereby deteriorating the brightness of the front light 110 and the contrast of the display that is transmitted through the light guider 112.

Also, as illustrated in Fig. 22, the source light emitted from the emitting face 112b of the light guider 112 is reflected by a reflecting plate built in the liquid crystal panel 120, is transmitted through the light guider 112, the air layer 131, and the front light cover 130, and is emitted to the observer side (the light component E illustrated in Fig. 22). However, when the emitted light component E is transmitted through the front light cover 130, backward scattered light (the light component F in Fig. 22) may be generated in the interface between the front light cover 130 and the air layer 131 or a part of the emitted light component E may be absorbed into the front light cover 130. As mentioned above, when the light component E is transmitted through the front light cover 130, the light component E may be attenuated to deteriorate the brightness of the front light 110.

Also, as illustrated in Fig. 22, external light may be incident from the outside of a liquid crystal display device. The external light is transmitted through the front light cover 130 and the light guider 112, is reflected by the reflecting plate built in the liquid crystal panel 120, is transmitted through the light guider 112 and the front light cover 130 again, and is emitted to the observer side (the light component G illustrated in Fig. 22). However, when the external light component G is incident on the front light cover 130, backward scattered light (the light component H in Fig. 22) may be generated and the contrast of black display may deteriorate due to the scattered light H.

Also, in the manufacturing processes of a liquid crystal display device, foreign substances may be mixed between the light guider 112 and the front light cover 130, thereby deteriorating the external appearance of the liquid crystal display device.

Also, since the front light cover 130 and the light guider 112 are separately required, the number of parts that constitute the liquid crystal display device increases, thereby causing an increase in the cost of the parts.

European Patent Specification No. 1424576, cited under Art. 54(3) EPC, discloses an illuminating device, a light guide plate and a liquid crystal device. The emitting face of the light guide plate is prism shaped the prism having the same shape as in the present invention. This disclosed light guide plate does not comprise a protective layer.

It is an object of the present invention to provide an improved light guider.

According to the present invention there is provided a laminar light guider as described in claim 1. Further preffered embodiments are described in the dependent claims.

The light guider to be described hereinafter is capable of effectively and uniformly propagating the light incident from a light incident face to an emitting face.

Thus liquid crystal display device which includes the above-mentioned illumination device, has high contrast and high brightness, and excellent display quality.

Because the illumination device, is laminated on the face opposite to the emitting face of the light guider, it is possible to prevent the light guider from being damaged. Also, since it is possible to omit a front light cover by providing the protective layer, it is possible to reduce the number of parts.

Also, since the protective layer is directly provided on the light guider, an air layer is not formed between the light guider and the protective layer. Therefore, it is possible to reduce the quantity of backward scattered light unlike in the conventional art and to increase the brightness.

Also, since the protective layer is made thinner than the conventional front light cover, it is possible to reduce the quantity of the light absorbed into the protective layer itself and to increase the brightness.

Also, since it is effectively prevent the light that propagates inside the light guider from leaking from the face opposite to the emitting face by forming prismatic shapes on the emitting face, when the illumination device having the above structure is used as a front light of a display device, it is possible to remarkably reduce the quantity of the light that leaks to the front direction of the display device and to display images with high contrast. Also, since the face opposite to the emitting face of the light guider may be a flat plane, when the emitting face and the opposite face are applied to the front light of the display device, the flat plane can be arranged on a display surface to protect the prism.

Also, the illumination device of the present invention is the illumination device as set forth above in which the protective layer is a reflection-preventing layer.

According to such a structure, it is possible to reduce the quantity of the backward scattered light generated when the external light is incident on the light guider and to increase the contrast ratio.

Also, the illumination device of the present invention is the illumination device as set forth above in which the protective layer is made of a transparent material layer.

According to such a structure, it is possible to reduce the quantity of the light absorbed into the protective layer itself and to increase the brightness.

Also, the illumination device of the present invention is the illumination device as set forth above in which the protective layer is formed of a multi-layer film including a dielectric layer.

According to such a structure, each layer of the multi-layer film has a thickness of about 10 to 150 nm (100 to 1500 Å) and is made of a metal oxide, such as SiO₂, TiO₂, and ZrO₂, atone, polycarbonate, polyurethane, acryl, or alicyclic resin. The multi-layer film may be composed of a single layer and a plurality of layers.

Also, the illumination device of the present invention is the illumination device as set forth above in which the prismatic shapes are composed of a plurality of projections formed on the emitting face and slopes are formed on the projections in the direction where the propagated light travels.

According to such a structure, it is possible to easily form a light guider that emits the propagated light from the emitting face. The projections only have to include the slopes, but they are not limited to a particular shape.

According to the illumination device of the present invention, preferably, an angle formed by a direction in which propagated light incident on the slopes travels and a direction in which reflected light of the propagated light travels is in the range of 90° to 150°.

According to such a structure, it is possible to effectively reduce the quantity of the light that is transmitted through the slopes and leaks and to provide an illumination device of high brightness.

According to the illumination device of the present invention, preferably the insides of the slopes face the external side of the emitting face.

According to such a structure, it is possible to obtain an illumination device capable of effectively emitting the propagated light to the side of the emitting face of the light guider by the slopes.

Since the propagated light is introduced from the light source to the light guider and travels while being repeatedly totally reflected by the upper and lower faces of the light guider, the propagated light is scattered to some extent. The distribution of the angles of the propagated light with respect to a horizontal plane changes in accordance with the propagated distance of the propagated light inside the light guider. For example, in the light guider of 1 mm thick, which is made of acryl resin, around the light source, the distribution of the angles is about ±40°. In the position spaced from the light source by the distance of about 50 mm, the distribution of the angles is about ±20°. Therefore, the angle of inclination of the slopes can be set in accordance with the distribution of the angles of the propagated light to obtain uniform illumination light.

According to the illumination device of the present invention the sections of the projections are wedge-shaped.

According to the illumination device of the present invention, the angle of inclination of the slopes is in the range of 40° to 60°.

The angle of inclination is the angle formed by the horizontal plane of the light guider with respect to the slopes. According to such a structure, it is possible to effectively reflect the light incident on the slopes and to obtain an illumination device of high brightness. It is also possible to reduce the quantity of the light that leaks from the slopes and to easily display images with high contrast when the illumination device is used as the front light.

According to the illumination device of the present invention, the light source may comprise a bar light guider arranged along the side end face of the light guider and a light emission element arranged on the end face of the bar light guider.

According to such a structure, since light is uniformly propagated to the direction in which the bar light guider extends by the bar light guider, the light incident on the side end face of the light guider is uniformly distributed in the side end face. As a result, it is possible to uniform the distribution of light quantities in the emitting face of the light guider.

Embodiments of the invention will now be described, by way of example only, with reference to the accompanying drawings, in which:
Fig. 1 is a perspective view illustrating a liquid crystal display device according to a first embodiment of the present invention;
Fig. 2 is a sectional view of the liquid crystal display device illustrated in Fig. 1;
Fig. 3 is a partial sectional view illustrating a state in which the front light illustrated in Fig. 2 guides light;
Fig. 4 is a partial sectional view illustrating a state in which each of the projections 14 illustrated in Fig. 3 reflects propagated light;
Fig. 5 is a partial sectional view illustrating a state in which the front light illustrated in Fig. 2 guides light;
Fig. 6 is a partial sectional view illustrating a front light according to another embodiment of the present invention;
Fig. 7 is a perspective view illustrating a liquid crystal display device including a light guider not according to the present invention;
Fig. 8 is a sectional view of the liquid crystal display device illustrated in Fig. 7;
Fig. 9 is a partial perspective view illustrating an enlargement of each of the projections of the light guider of Fig.7;
Fig. 10 is a partial sectional view illustrating a state in which the light guider not according to the present invention guides light;
Fig. 11 is a partial sectional view illustrating a state in which propagated light is reflected by each of the projections of the light guider not according to the present invention;
Fig. 12 is a perspective view illustrating a liquid crystal display device including a light source unit not according to the present invention;
Fig. 13 is a sectional view of the liquid crystal display device illustrated in Fig. 12;
Fig. 14 is a sectional view illustrating the light source unit illustrated in Fig. 13;
Fig. 15 is a partial sectional view illustrating a state in which the light source unit illustrated in Fig. 14 guides light;
Fig. 16 is an enlarged sectional view illustrating a state in which propagated light is reflected by each of the projections illustrated in Fig. 15;
Fig. 17 is a sectional view illustrating the light source unit according to a second example;
Fig. 18 is a sectional view illustrating the light source unit according to a third example;
Fig. 19 is a sectional view illustrating the light source unit according to a fourth example;
Fig. 20 is a view illustrating the structure of the section of a liquid crystal display device including a conventional illumination device;
Fig. 21 is a view illustrating a state in which the front light illustrated in Fig. 20 guides light; and
Fig. 22 is a view illustrating a state in which the front light illustrated in Fig. 20 guides light.

### DESCRIPTION OF THE PREFERRED EMBODIMENTS

Preferred embodiments of the present invention will now be described in detail with reference to the accompanying drawings.

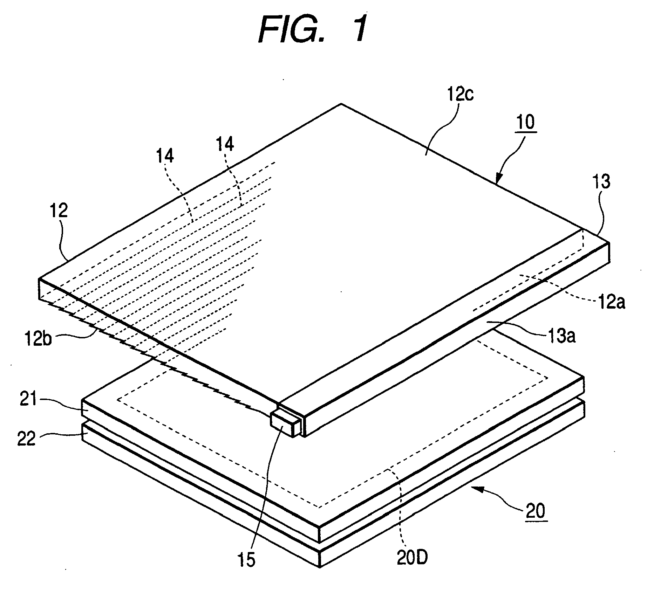

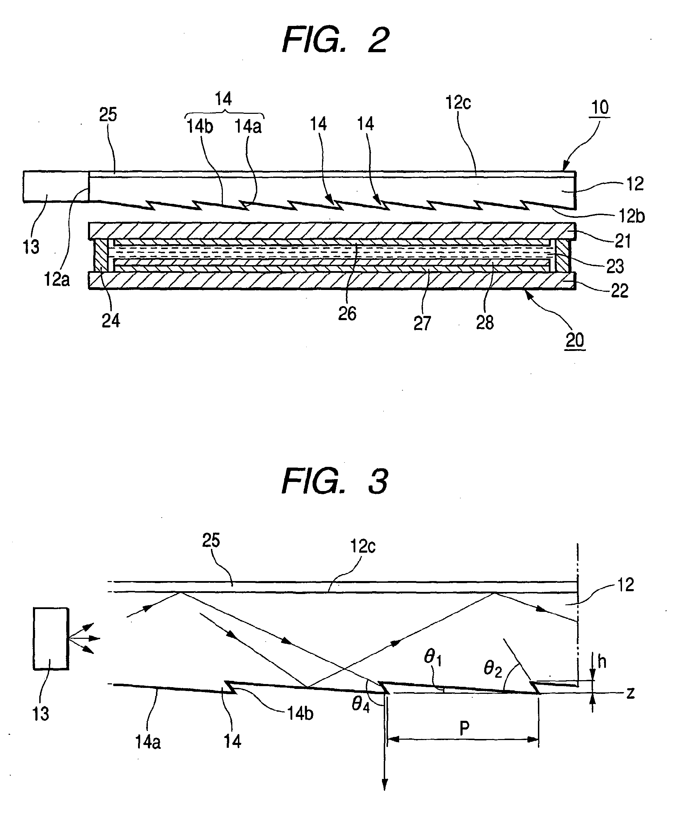

Fig. 1 is a perspective view illustrating a liquid crystal display device including a front light that is a first embodiment of the present invention. Fig. 2 is a sectional view of the liquid crystal display device illustrated in Fig. 1. Fig. 3 is a partial sectional view illustrating a state in which the front light illustrated in Fig. 2 guides light. The liquid crystal display device according to the present embodiment includes a front light (an illumination device) 10 and a liquid crystal panel 20 arranged on the back side (on the lower side in the drawing) of the front light 10.

As illustrated in Fig. 1, the front light 10 includes a substantially flat plate shaped transparent light guider 12, a bar light guider 13 arranged along the side end face 12a of the light guider 12, and a light emission element 15 arranged in at least one end face of the bar light guider 13 in its longitudinal direction. That is, in the front light 10 according to the present embodiment, the light emission element 15 and the bar light guider 13 are light sources and the side end face 12a of the light guider 12 is the light incident face of the light guider.

Also, as illustrated in Fig. 2, the liquid crystal panel side face (the lower face in the drawing) 12b of the light guider 12 on which a plurality of projections 14 that extend parallel to the side end face 12a of the light guider 12 are arranged has its section substantially saw-toothed.

Also, as illustrated in Fig. 2, a protective layer 25 is laminated on the face (the upper face in the drawing) 12c opposite to the liquid crystal panel side face of the light guider 12.

The liquid crystal panel 20 is a reflective type liquid crystal display device composed of an upper substrate 21 and a lower substrate 22 arranged to face each other. A rectangular region 20D indicated by a dotted line in Fig. 1 is the display region of the liquid crystal panel 20. Pixels (not shown) are arranged in a matrix in the display region 20D.

In the liquid crystal display device having the above-structure, a light guider 12 is arranged on the display region 20D of the liquid crystal panel 20 so that the images displayed on the liquid crystal panel 20 can be visualized with the light that is transmitted through the light guider 12. In a dark place where external light is not obtained, the light emission element 15 is turned on, the light emitted from the light emission element 15 is introduced from the light incident face 12a of the light guider 12 to the inside of the light guider through the bar light guider 13, and the light (the propagated light) that propagates inside the light guider is emitted from the lower face in the drawing (the emitting face) 12b of the light guider to the liquid crystal panel 20 so that the liquid crystal panel 20 is illuminated.

As illustrated in Figs. 2 and 3, the light guider 12 of the front light 10 is arranged on the display region of the liquid crystal panel 20 and emits the light emitted from the light emission element 15 from the emitting face 12b to the liquid crystal panel 20. The light guider 12 is made of transparent acryl resin. As illustrated in the partial sectional view of Fig. 2, on the emitting face 12b of the light guider 12, the plurality of projections 14 are formed so as to be parallel to each other in stripes in plan view to form prismatic shapes. The face 12c opposite to (opposite face) the emitting face 12b is a flat plane.

As illustrated in Fig. 3, each of the projections 14 formed on the emitting face 12b is composed of a pair of slopes inclined with respect to the horizontal reference plane z of the emitting face 12b and has its vertical section wedge-shaped. One of these slopes is a gentle slope 14a and the other one is a steep slope (a slope) 14b having an angle of inclination steeper than the angle of inclination of the gentle slope 14a. The gentle slope 14a has an angle of inclination θ₁ with respect to the horizontal reference plane z of the emitting face 12b. The steep slope 14b has an angle of inclination θ₂. The directions to which both the gentle slope 14a and the steep slope 14b are inclined are the same with respect to the normal line of the horizontal reference plane z. That is, the external surface of the steep slope 14b faces the opposite face 12c of the light guider 12 and the internal surface of the steep slope 14b faces the external side of the emitting face 12b.

The light that propagates inside the light guider 12 from the left side (the bar light guider 13 side) to the right side in Fig. 3 is reflected by the steep slope 14b of the emitting face 12b to the emitting face 12b and is emitted to the liquid crystal panel 20 arranged on the back side of the light guider 12.

As illustrated in Fig. 2, the protective layer 25 laminated on the opposite face 12c of the light guider 12 is laminated on the entire surface of the opposite face 12c. The protective layer 25 is made of a material harder than the light guider 12 and, in general, a high polymer material or a dielectric layer that does not absorb light at least within a visible light area. To be specific, the protective layer 25 is made of transparent resin, such as atone, acryl resin, polyester resin, polycarbonate resin, polyurethane resin, and alicyclic resin, an oxide film, such as SiO₂, TiO₂, and ZrO₂, or compounds thereof.

The protective layer 25 is used as a reflection-preventing layer so that the protective layer 25 prevents the external light incident on the light guider 12 from the outside from being scattered backward and increases the contrast ratio of the liquid crystal display device.

The thickness of the protective layer 25 is preferably in the range of 0.05 µm to 100 µm and, more preferably, in the range of 0.1 µm to 10 µm. When the thickness of the protective layer 25 is less than 0.05 µm, the light guider 12 is easily damaged, which is not preferable. When the thickness of the protective layer 25 is larger than 100 µm, the quantity of the light absorbed by the protective layer 25 increases, thereby deteriorating the brightness of the liquid crystal display device, which is not preferable.

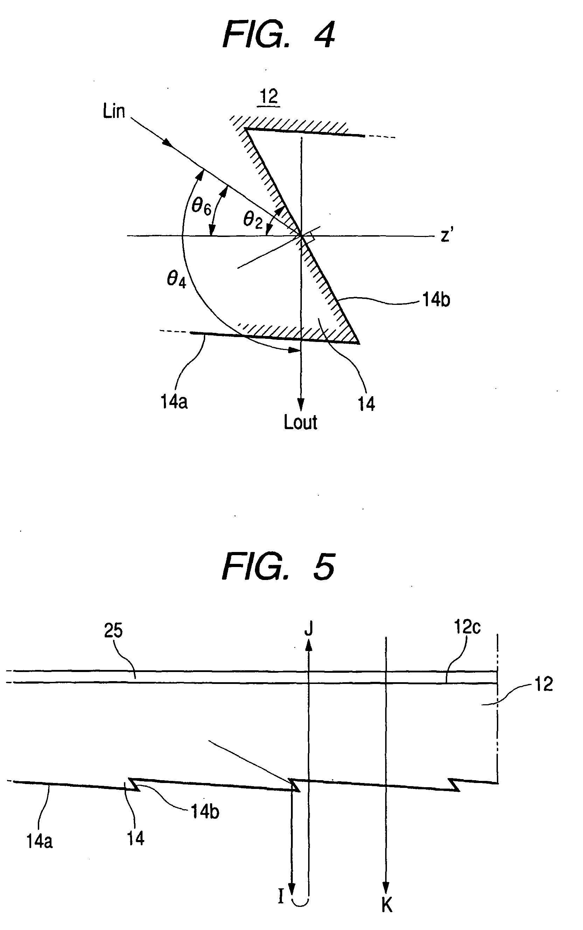

Next, with reference to Figs. 3 and 4, the operation of the steep slope 14b reflecting the propagated light will be described. Fig. 4 is a partial sectional view illustrating an enlargement of the steep slope 14b illustrated in Fig. 3. In the front light 10 according to the present embodiment, as illustrated in Fig. 4, the steep slope 14b is formed to have the angle of inclination θ₂ so that the angle θ₄ formed by the propagated light Lᵢₙ incident from the inside of the light guider 12 to the steep slope 14b and the reflected light Lₒᵤₜ obtained by reflecting the propagated light Lᵢₙ by the steep slope 14b is an obtuse angle. That is, in the position where the steep slope 14b (the projection 14) is formed, the propagated light Lᵢₙ is incident on the steep slope 14b at the incident angle larger than 45°. Therefore, it is possible to prevent the propagated light Lᵢₙ incident on the steep slope 14b from being transmitted to the maximum. As a result, the quantity of the light reflected by the steep slope 14b is increased to improve the brightness of the front light 10.

Also, the present inventor testifies that it is possible to increase the quantity of the illumination light of the front light 10 by optimizing the angle of inclination of the steep slope 14b, which will be described in detail in embodiments as mentioned later.

In the front light 10, the angle of inclination θ₁ of the gentle slope 14a illustrated in Fig. 3 is in the range of 0.5° to 5° with respect to the horizontal reference plane z and the angle of inclination θ₂ of the steep slope 14b is in the range of 40° to 60°. By having the angle of inclination θ₁ of the gentle slope 14a in the range of 0.5° to 5° with respect to the horizontal reference plane z and the angle of inclination θ₂ of the steep slope 14b in the range of 40° to 60°, it is possible to effectively emit the light that propagates inside the light guider 12 to the liquid crystal panel 20 and to realize a liquid crystal display device capable of displaying bright images. When the angle of inclination θ₁ of the gentle slope 14a is less than 0.5°, the average brightness of the front light deteriorates. When the angle of inclination θ₁ of the gentle slope 14a is larger than 5°, it is not possible to uniform the quantity of the light emitted from the surface of the light guider. When the angle of inclination θ₂ of the steep slope 14b is less than 40° and is larger than 45°, the quantity of light that is transmitted through the steep slope 14b and leaks is increased to reduce the quantity of the light emitted from the emitting face 12b (that is, the brightness of the front light 10, which is not preferable.

Also, in the front light 10 according to the present embodiment, the pitch P of the projections 14 (the distance between the tops or the bottoms of the prism grooves 14) is uniform inside the emitting face 12b of the light guider. Also, in the case of the front light 10 according to the present embodiment, the height h (the distance between the horizontal reference plane z and the bottom of each of the projections 14) of each of the projections 14 is uniform in the emitting face 12b.

Also, the pitch P and the height h of each of the projections 14 is not necessarily uniform in the emitting face 12b and may be changed to form the projections 14, which does not depart from the technical scope of the present invention. Also, the angles of inclination θ₁ and θ₂ of the respective projections 14 may be changed to form the projections 14, without departing from the technical scope of the present invention.

Next, as illustrated in Fig. 5, the light (the light component I in Fig. 5) emitted from the light guider 12 is reflected by the reflecting plate built in the liquid crystal display panel (not shown), becomes reflected light (the light component J in Fig. 5), and is incident on the light guider 12 again. The reflected light J incident on the light guider 12 is transmitted through the protective layer 25 and is emitted to the observer side. Since the protective layer 25 is adhered to the light guider 12, the backward scattered light of the reflected light J is reduced in the interface between the protective layer 25 and the light guider 12 to prevent the reflected light J from being attenuated. Since the thickness of the protective layer 25 is smaller than the thickness of the conventional front light cover, the quantity of the reflected light J absorbed into the protective layer is reduced to prevent the reflected light J from being attenuated.

As illustrated in Fig. 5, in the liquid crystal display device according to the present embodiment, the external light (the light component K in Fig. 5) incident from the outside of the liquid crystal display device is reflected by the reflecting plate of the liquid crystal display panel so that the external light K may be used as illumination light. According to the present embodiment, since the protective layer 25 is also used as a reflection-preventing layer, when the external light K is incident on the protective layer 25, the quantity of the backward scattered light of the external light K is reduced in the interface between the protective layer 25 and the external air to prevent the external light K from deteriorating.

As mentioned above, by laminating the protective layer 25 on the light guider 12, the quantity of the backward scattered light of the reflected light J and the external light K is reduced to improve the brightness of the liquid crystal display device. Also, it is possible to improve the brightness of the liquid crystal display device by reducing the quantity of the light absorbed into the protective layer 25.

Also, since the protective layer 25 is laminating on the face of the light guider 12 on the observer side, it is possible to prevent the light guider 12 from being damaged. Also, by laminating the protective layer 25, it is possible to omit the conventional front light cover and to reduce the number of parts.

Next, the bar light guider 13 is a rod-shaped member made of transparent acryl resin and is arranged along the side end face 12a of the light guider 12. On the back side (the face opposite to the light guider 12) of the bar light guider 13, prismatic shapes (not shown) are provided. It is possible to uniformly radiate the light that is incident from the end face and propagates in the longitudinal direction of the bar light guider 13 onto the side end face 12a of the light guider 12.

In the liquid crystal panel 20, a liquid crystal layer 23 is inserted and maintained between the upper substrate 21 and the lower substrate 22 and the liquid crystal layer 23 is sealed by a sealing material 24 provided in the form of a plane frame along the peripheral edges on the internal surface side of the substrates 21 and 22. A liquid crystal control layer 26 is formed on the internal surface side (on the lower substrate 22 side) of the upper substrate 21. A reflecting layer 27 having a metallic thin film for reflecting the illumination light or the external light of the front light 10 is formed on the internal surface side (on the upper substrate 21 side) of the lower substrate 22. A liquid crystal control layer 28 is formed on the reflecting layer 27.

The liquid crystal control layers 26 and 28 include electrodes or alignment films for controlling the driving of the liquid crystal layer 23 and semiconductor elements for switching the electrodes. Also, the liquid crystal control layers 26 and 28 may include color filters for displaying colors.

The reflecting layer 27 includes a reflecting film made of a metallic thin film of a high reflectance, such as aluminum or silver, for reflecting the external light incident on the liquid crystal display panel 20 or the illumination light of the front light 10 and preferably includes light scattering means for preventing the reflected light from becoming intensive in a specific direction and deteriorating the visibility of the liquid crystal display device. A concavo-convex reflecting film, or a scattering film obtained by scattering resin beads having a refractive index different from.the refractive index of the material of which a resin film is made in the resin film may be used as the light scattering means.

According to the liquid crystal display device according to the present embodiment having the above-mentioned structure, prismatic shapes are formed on the emitting face 12b of the light guider 12 of the front light 10 arranged in front of the liquid crystal panel 20. The steep slopes 14b of the projections 14 of the emitting face 12b are formed such that the obtuse reflected light is generated with respect to the propagated light incident from the inside of the light guider 12. Therefore, it is possible to improve the reflectance of the propagated light incident on the steep slope 14b and to improve the brightness of the illumination light. Also, as mentioned above, since the reflectance of the steep slope 14b is improved, the quantity of the light that leaks to the front of the liquid crystal display device (the upper side of the front light 10) is reduced. Also, since the prismatic shapes are formed on the face that faces the liquid crystal panel 20, it is possible to prevent the projections 14 from being damaged. Therefore, the front light according to the present embodiment is more durable than the conventional front light.

Therefore, according to the liquid crystal display device of the present invention, in the reflective display where the front light 10 is turned on, it is possible to display high quality images with high brightness and high contrast.

Also, since the top on the observer side is flat, when an input device is arranged, it is possible to easily transmit light and to stably provide the input device.

Also, according to the present embodiment, the protective layer 25 is made of, for example, a single film. However, the protective layer according to the present invention is not restricted to the single film and may be a multi-layer film composed of a dielectric layer, such as a metal oxide. In this case, as the multi-layer film, two to ten layers of transparent material are preferably laminated. Also, all of the layers of the multi-layer film may be made of the same transparent material and each layer may be made of a different transparent material. The transparent materials used here may include transparent resin, such as atone, acryl resin, polyester resin, polycarbonate resin, polyurethane resin, and alicyclic resin, and an oxide film, such as SiO₂, TiO₂, and ZrO₂. When the protective layer 25 has such a structure, it is easier for the protective layer 25 to be effectively used as the reflection-preventing layer as compared when the protective layer 25 is made of a single material so that it is possible to reduce the quantity of the backward scattered light, to improve the contrast, and to improve the durability against damage of the surface of the protective layer 25.

### (Another Embodiment of Illumination Device)

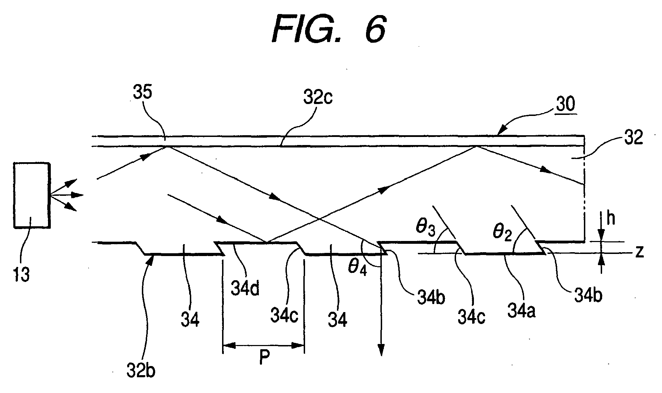

According to the above embodiment, as prismatic shapes of the emitting face 12b of the light guider, the front light in which the sections of the projections 14 are wedge-shaped and the section of the emitting face 12b is saw-toothed is described. However, the prismatic shapes of the emitting face 12b are not restricted to the above-mentioned structure and any structure capable of effectively emitting the illumination light using the steep slope will do. Fig. 6 illustrates another embodiment of the illumination device according to the present invention, that is, the structure of the section of the front light including the light guider having the substantially rectangular emitting face 12b on which the plurality of projections whose sections are substantially trapezoidal are arranged.

The front light 30 illustrated in Fig. 6 includes a light guider 32 having the partial sectional structure illustrated in Fig. 6 instead of the light guider 12 of the front light 10 illustrated in Figs. 1 and 2. The external appearance of the front light 30 is almost the same as the external appearance of the front light 10.

The lower face of the light guider 32 is an emitting face 32b. The face opposite to the emitting face 32b is an opposite face 32c. A plurality of projections 34 that extends in the direction orthogonal to the plane of the drawing is arranged on the emitting face 32b. The opposite face 32c is a flat plane. Also, a protective layer 35 having the same structure as that of the protective layer 25 according to the above embodiment is provided on the opposite face 32c to the emitting face.

In each of the projections 34, a flat portion 34a is a top portion and a first slope (slope) 34b and a second slope 34c are formed on both sides in the direction of the width of the flat portion so that the sections of the projections 34 are substantially trapezoidal. The first slope 34b is inclined with respect to the horizontal reference plane z at the angle of inclination θ₂ and the second slope 34c is inclined at the angle of inclination θ₃. Also, the first slope 34b and the second slope 34c are inclined to the same side with respect to the normal line of the light guider 32.

Between adjacent projections 34, bottom portions 34d formed of flat planes are provided. In the front light according to the present embodiment, the plane regions of the emitting face 32b excluding the first and second slopes 34b and 34c are flat planes parallel to the horizontal reference plane z together with the flat portions 34a of the projections 34.

The angle of inclination θ₂ of the first slope 34b, similar to the angle of inclination θ₂ of the steep slope 14b illustrated in Fig. 3, generates the reflected light so as to form an obtuse angle θ₄ with respect to the propagated light incident on the first slopes 34b. The pitch P and the height h of the projections 34 are uniform in the emitting face 32b like the projections 14 illustrated in Fig. 3.

The angle of inclination θ₃ of the second slope 34c is preferably in the range of 40° to 60°. By having the angle of inclination θ₃ of the second slope 34c in the range of 40° to 60°, it is possible to reduce the quantity of the light that leaks from the first slope 34b and to improve the brightness of the front light.

According to the front light 30 of the present embodiment, since it is possible to effectively reflect the light incident on the first slope 34b so that the illumination light can be made, it is possible to obtain illumination light of high brightness. Also, since the quantity of the light that is transmitted through the first slopes 34b and is emitted to the opposite face 32c is reduced, when the front light 30 according to the present invention is arranged in front of the display device, it is possible to prevent the contrast from deteriorating and to display high quality images.

Also, since the plane regions of the emitting face 32b excluding the slopes 34b and 34c are flat planes, it is difficult for the light that propagates inside the light guider 32 to leak from the surfaces excluding the slopes. Therefore, it is possible to improve the use efficiency of the light source and to improve the brightness of the illumination light.

On the other hand, according to the above embodiment, a case in which the illumination device according to the present invention is used as the front light is described. However, the illumination device according to the present invention can be used as the back light arranged on the back side of the liquid crystal panel. In such a case, the light guider in which the prismatic shapes are formed is preferably arranged so as to face the back side of the liquid crystal panel. According to such a structure, it is also possible to obtain illumination light of higher brightness as compared with the conventional back light and to provide a liquid crystal display device capable of displaying bright images.

Next, another example not according to the present invention will be described.

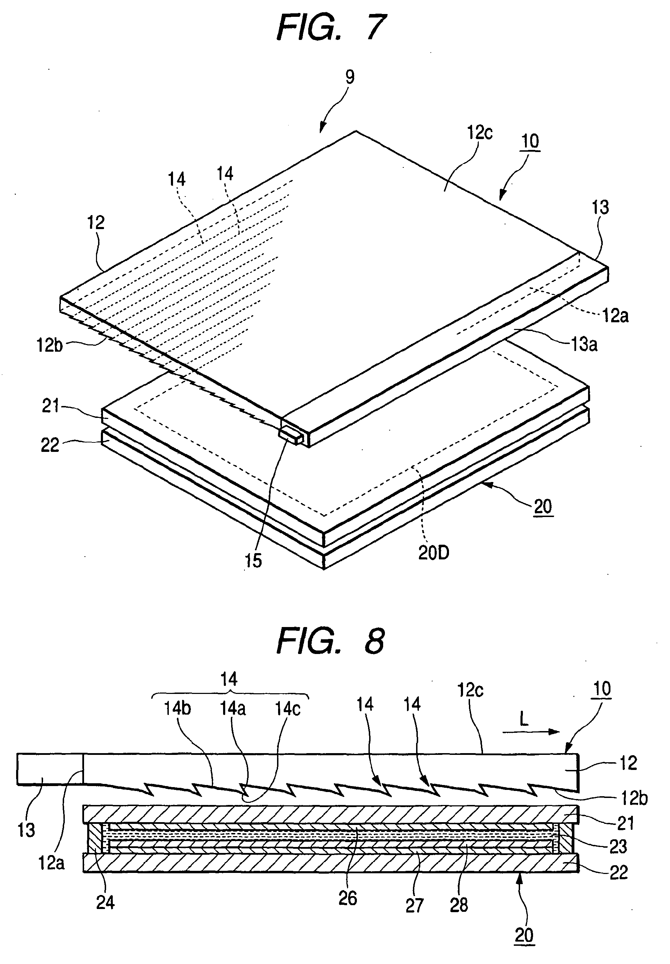

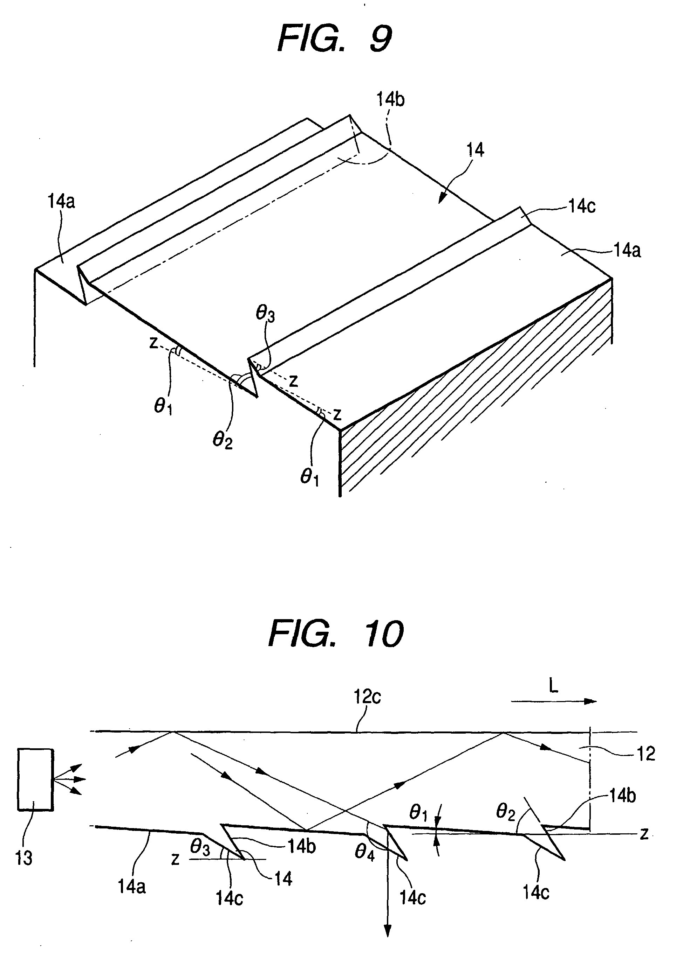

As illustrated in Figs. 8 and 9, the light guider 12 is a substantially flat plate shaped member that is arranged on the display region of the liquid crystal panel 20 and emits the light emitted from the light emission element 15 to the light propagating direction L from the emitting face 12b to the liquid crystal panel 20. The light guider 12 is formed of, for example, transparent acryl resin. As illustrated in the partial sectional view of Fig. 8, the plurality of projections 14 are formed on the emitting face 12b of the light guider 12 so as to be parallel to each other and in stripes in plan view to form prismatic shapes. The face (the opposite face) 12c opposite to the emitting face 12b is a flat plane.

As illustrated in Figs. 9 and 10, the projection 14 formed on the emitting face 12b is composed of three slopes, that is, the first slope (the gentle slope) 14a, the second slope (the steep slope) 14b, and the third slope (the tip slope) 14c inclined with respect to the horizontal reference plane z of the emitting face 12b and have sections wedge-shaped. The first slope (the gentle slope 14a is inclined with respect to the horizontal reference plane z at the angle of inclination θ₁ in the light propagating direction L. The second slope (the steep slope) 14b is inclined with respect to the horizontal reference plane z at the angle of inclination θ₂ in the light propagating direction L. The third slope (the tip slope) 14c forms the tip portion of the projection 14 so as to connect the first slope to the second slope and is inclined with respect to the horizontal reference plane z at the angle of inclination θ₂ in the light propagating direction L.

The directions of inclination of the first slope 14a, the second slope 14b, and the third slope are the same with respect to the normal line of the horizontal reference plane z. That is, the external surface of the second slope 14b faces the opposite face 12c of the light guider 12. The internal surface of the second slope 14b faces the external side of the emitting face 12b. The external surfaces of the first slope 14a and the third slope 14c face the external side of the emitting face 12b of the light guider 12. The internal surfaces of the first slope 14a and the third slope 14c face the opposite face 12c. In Fig. 10, the light that propagates inside the light guider 12 from the left side (to the bar light guider 13 side) to the right side is reflected by the second slope 14b of the emitting face 12b to the emitting face 12b side and is emitted to the liquid crystal panel 20 arranged on the back side of the light guider 12.

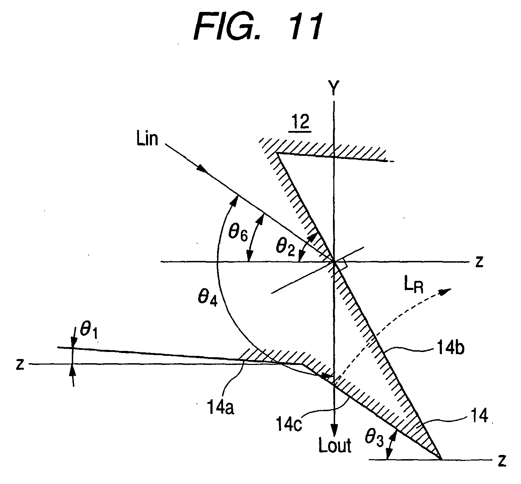

Here, with reference to Figs. 10 and 11, the operation of the second slope 14b reflecting the propagated light will be described. Fig. 11 is a partial sectional view illustrating an enlargement of the second slope 14b illustrated in Fig. 10. In the light guider 12, as illustrated in Fig. 11, the second slope 14b is formed to have the angle of inclination θ₂ so that the angle θ₄ formed by the propagated light Lᵢₙ incident from the inside of the light guider 12 on the second slope 14b and the reflected light Lₒᵤₜ obtained by reflecting the propagated light Lᵢₙ by the second slope 14b is an obtuse angle. That is, in the position where the second slope 14b (the projection 14) is formed, the propagated light Lᵢₙ is incident on the second slope 14b at an incident angle that is larger than 45°. Therefore, it is possible to prevent the propagated light Lᵢₙ incident on the second slope 14b from being transmitted to the maximum. As a result, the quantity of the light reflected by the second slope 14b is increased to improve the brightness of the front light 10.

At this time, when the reflected light Lₒᵤₜ obtained by reflecting the propagated light Lᵢₙ by the second slope 14b is emitted from the emitting face 12b of the light guider 12, a part of the reflected light Lₒᵤₜ is rereflected from the inside of the emitting face 12b to the light guider 12 to generate leaking light L_{R}. However, the leaking light L_{R} is reflected by the third slopes 14c formed at the tip of the first slope 14a at an angle that significantly deviates from the direction y orthogonal to the horizontal reference plane z, that is, the direction orthogonal to the display surface of the liquid crystal panel 20 to prevent the leaking light L_{R} from being reflected in the direction y orthogonal to the display surface of the liquid crystal panel 20. Therefore, it is possible to remarkably reduce the quantity of the leaking light to the direction y orthogonal to the horizontal reference plane z (the direction y orthogonal to the display surface of the liquid crystal panel 20), which may deteriorate the contrast of the liquid crystal panel 20, and to remarkably improve the visibility of the liquid crystal panel 20. Also, the present invention testifies that the contrast of a liquid crystal display (LCD) by the operation of the third slope 14c, which will be described in detail with reference to examples as mentioned later.

In the light guider 12, the angle of inclination θ₁ of the first slope 14a illustrated in Figs. 9 and 10 is preferably in the range of 0.5° to 5° with respect to the horizontal reference plane z and the angle of inclination θ₂ of the second slope 14b is preferably in the range of 40° to 60°. By having the angle of inclination θ₁ of the first slope 14a in the range of 0.5° to 5° with respect to the horizontal reference plane z and the angle of inclination θ₂ of the second slope 14b in the range of 40° to 60°, it is possible to effectively emit the light that propagates inside the light guider 12 to the liquid crystal panel 20 and to realize a liquid crystal display device capable of displaying bright images. When the angle of inclination θ₁ of the first slope 14a is less than 0.5°, the average brightness of the front light deteriorates. When the angle of inclination θ₁ of the gentle slope 14a is larger than 5°, it is not possible to uniform the quantity of the light emitted from the surface of the light guider. When the angle of inclination θ₂ of the second slope 14b is less than 40° and is larger than 45°, the quantity of light that is transmitted through the second slope 14b and leaks is increased to reduce the quantity of the light emitted from the emitting face 12b (that is, the brightness of the front light 10), which is not preferable.

Also, in the light guider 12, the angle of inclination θ₃ of the third slope 14c illustrated in Figs. 9 and 10 is preferably in the range of -5° to 10° with respect to the horizontal reference plane z. When the angle of inclination θ₃ of the third slope 14c illustrated in Fig. 10 is in such a range, since a part of the reflected light Lₒᵤₜ is re-reflected to the light guider 12, it is possible to reflect the leaking light L_{R} at an angle that significantly deviates from the direction y orthogonal to the horizontal reference plane z, that is, the direction orthogonal to the display surface of the liquid crystal panel 20 and to significantly improve the visibility of the liquid crystal panel 20.

In the liquid crystal display device 9 having the above-mentioned structure, since the second slope 14b of the projection 14 formed on the emitting face 12b of the light guider 12 of the front light 10 arranged in front of the liquid crystal panel 20 generates the reflected light at an obtuse angle with respect to the propagated light incident from the light guider 12, it is possible to improve the reflectance of the propagated light incident on the second slope 14b and to improve the brightness of the illumination light. Since the leaking light when the reflected light is emitted is reflected by the third slope 14c of.the projection 14 formed on the emitting face 12b at an angle that significantly deviates from the direction orthogonal to the display surface of the liquid crystal panel 20, it is possible to improve the contrast of the liquid crystal panel 20 and to significantly improve the visibility. Therefore, according to the liquid crystal display device 9 in the reflective display where the front light 10 is turned on, it is possible to display high quality images with high contrast.

Also, according to the above-mentioned example, a case in which the illumination device according to the present invention is used as the front light has been described. However, the illumination device can be used as the back light arranged on the back side of the liquid crystal panel. In such a case, the light guider in which the projections are formed is preferably arranged so as to face the back side of the liquid crystal panel. According to this structure, it is possible to obtain the illumination light of higher brightness as compared with the conventional back light and to provide a liquid crystal display device capable of displaying bright images.

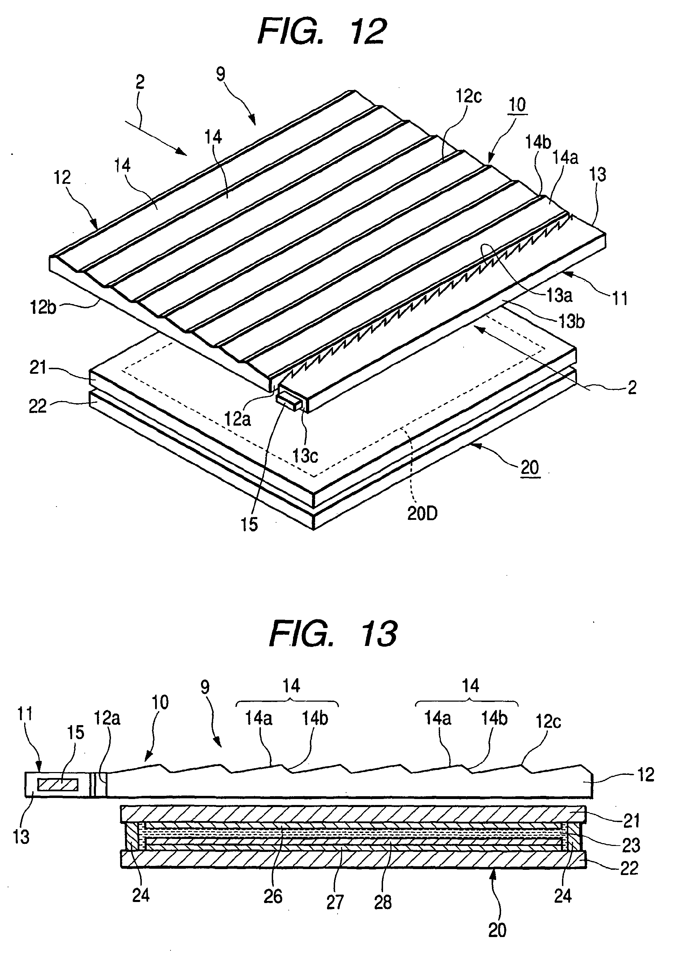

Fig. 12 is a perspective view schematically illustrating the liquid crystal display device including the bar light guider. Fig. 13 is a sectional view as seen from the position of the arrow 2 of the liquid crystal display device illustrated in Fig. 12. As illustrated in Figs. 12 and 13, the liquid crystal display device 9 includes the front light (the illumination device) 10 and the liquid crystal panel 20 arranged on the back side (on the lower face side in the drawing) of the front light 10.

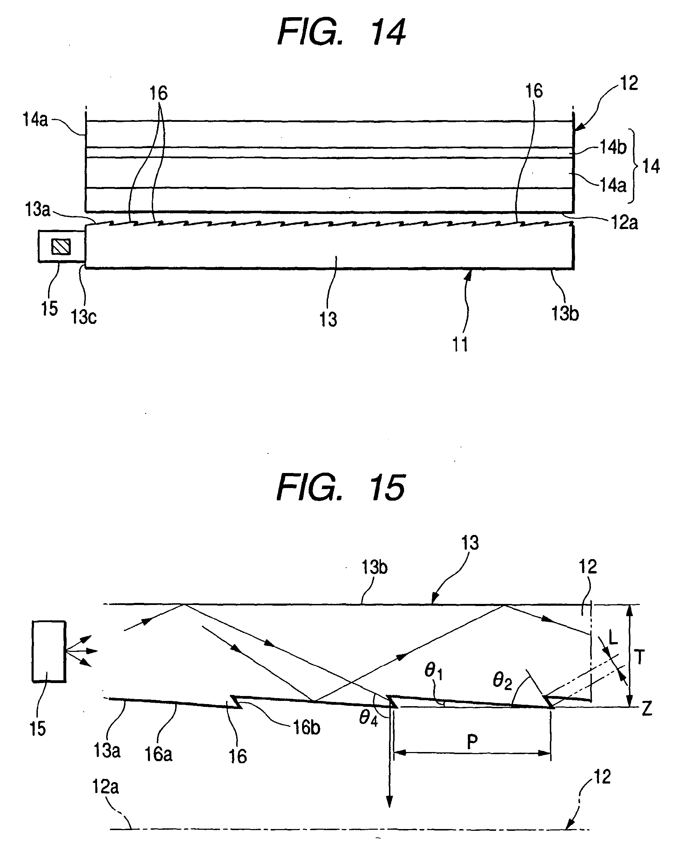

Fig. 14 is a sectional view illustrating the structure of a light source unit. A light source unit 11 that emits light to the light guider 12 is composed of the bar light guider 13 and the light emission element (the light source) 15. The bar light guider 13 is a square rod-shaped transparent member made of, for example, transparent acryl resin. The light emission element (the light source) 15 is composed of one or a plurality of light emission diodes (LEDs) and is, for example, a point light source that irradiates white light. The white light may be obtained by a white LED and may be obtained by arranging the LEDs of the three primary colors, that is, R, G, and B and mixing the three primary colors with each other in the bar light guider 13.

As illustrated in Figs. 14 and 15, in the bar light guider 13, the side that faces the incident face 12a of the light guider 12 forms an emitting face 13a and the side opposite to the emitting face 13a forms a reflecting face 13b. In the emitting face 13a of the bar light guider 13, a plurality of projections 16 are formed so as to be parallel to each other and in stripes in plan view to form the prismatic shapes and the reflecting face 13b opposite to the emitting face 13a is flat. Also, the end face connected to the light emission element (the light source) 15 forms an incident face 13c. The light of the light emission element (the light source) 15 is introduced from the incident face 13c on the bar light guider 13.

Each of the projections 16 formed on the emitting face 13a is composed of a pair of slopes inclined with respect to the horizontal reference plane z of the emitting face 13a and has its vertical section wedge-shaped. One of these slopes is a gentle slope 16a and the other one is a steep slope (a slope) 16b having an angle of inclination steeper than the angle of inclination of the gentle slope 16a. The gentle slope 16a has an angle of inclination θ₁ with respect to the horizontal reference plane z of the emitting face 13a. The steep slope 16b has an angle of inclination θ₂. The directions to which both the gentle slope 16a and the steep slope 16b are inclined are the same with respect to the normal line of the horizontal reference plane z. That is, the external surface of the steep slope 16b faces the reflecting face 13b of the bar light guider 13 and the internal surface of the steep slope 16b faces the external side of the emitting face 13a.

The light that propagates inside the bar light guider 13 from the left side (the light emission element 15 side) to the right side in Fig. 15 is reflected by the steep slope 16b of the emitting face 13a to the emitting face 13a and is emitted to the incident face 12a of the light guider 12.

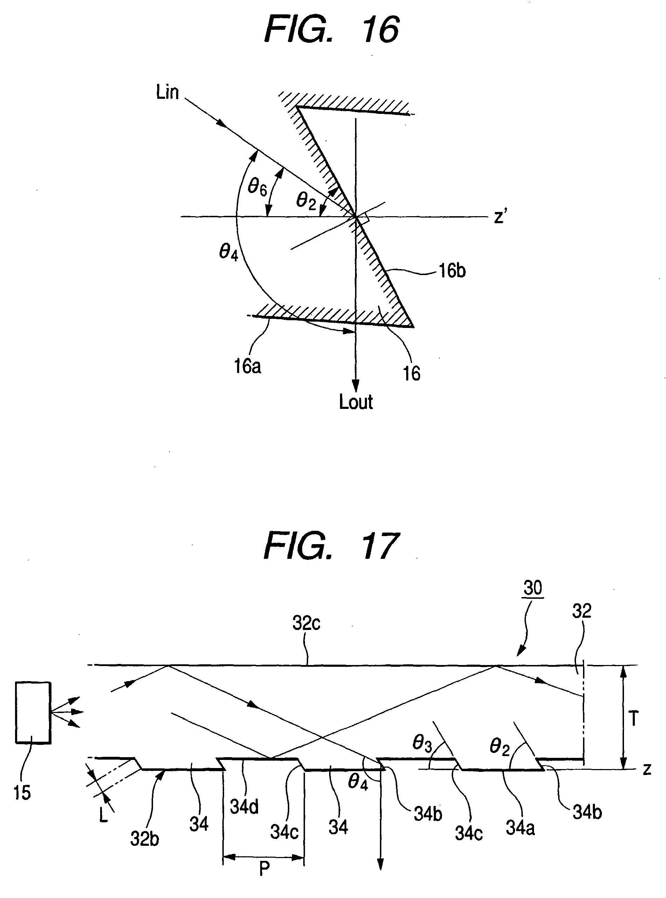

Here, with reference to Figs. 15 and 16, the operation of reflecting the propagated light by the steep slope 16b will be described. Fig. 16 is a partial sectional view illustrating an enlargement of the steep slope 16b illustrated in Fig. 15. In the light source unit 11, as illustrated in Fig. 16, the steep slope 16b is formed to have the angle of inclination θ₂ so that the angle θ₄ formed by the propagated light Lᵢₙ incident from the inside of the light guider 13 on the steep slope 16b and the reflected light Lₒᵤₜ obtained by reflecting the propagated light Lᵢₙ by the steep slope 16b is an obtuse angle. That is, in the position where the steep slope 16b (the projection 16) is formed, the propagated light Lᵢₙ is incident on the steep slope 16b at an incident angle that is larger than 45°.

Therefore, it is possible to prevent the propagated light Lᵢₙ incident on the steep slope 16b from being transmitted to the maximum. As a result, the quantity of the light reflected by the steep slope 16b is increased to increase the quantity of the light emitted from the emitting face 13a to the light guider 12. Also, the present inventor testifies that it is possible to increase the quantity of the emitted light of the light source unit 11 by optimizing the angle of inclination of the steep slope 14b.

In the light source unit 11, the angle of inclination θ₁ of the gentle slope 16a illustrated in Fig. 15 is preferably in the range of 0.5° to 5° with respect to the horizontal reference plane z and the angle of inclination θ₂ of the steep slope 16b is preferably in the range of 40° to 60°. When the angle of inclination θ₁ of the gentle slope 16a is less than 0.5°, the average brightness of the light source unit 11 deteriorates. When the angle of inclination θ₁ of the gentle slope 16a is larger than 5°, it is not possible to uniform the quantity of the light emitted from the bar light guider 13. When the angle of inclination θ₂ of the steep slope 16b is less than 40° and is larger than 60°, the quantity of light that is transmitted through the steep slope 16b and leaks is increased to reduce the quantity of the light emitted from the emitting face 13a (that is, the brightness of the front light 11). Also, the pitch P of the projections 16 is in the range of 0.1 mm to 0.4 mm.

When the projections 16 that constitute the bar light guider 13 are formed in the above-mentioned range, it is possible to emit the light the propagates inside the bar light guider 13 to the light guider 12 without loss by performing total reflection of almost 100% and to realize a liquid crystal display device capable of displaying bright and clear images.

As mentioned above, in the liquid crystal display device described above including the light source unit 11, the prismatic shapes are formed on the emitting face 13a of the bar light guider 13 in the light source unit 11 that supplies light to the light guider 12 arranged in front of the liquid crystal panel 20. The steep slope 16b of the projection 16 on the emitting face 13a is formed so as to generate the reflected light at an obtuse angle with respect to the light that propagates inside the bar light guider 13 so that it is possible to improve the reflectance of the propagated light incident on the steep slope 16b and to improve the brightness of the illumination light. Also, as mentioned above, since the reflectance of the steep slope 16b increases, the quantity of the unnecessary leaking light that does not contribute to the illumination to the liquid crystal display panel 20 is reduced. Also, since the prismatic shapes are formed on the face that faces the incident face 12a of the light guider 12, it is possible to prevent the projections 16 from being damaged.

According to the liquid crystal display device including the light source unit and the illumination device, it is possible to display high quality images with high contrast.

According to the above example, as prismatic shapes formed on the emitting face 13a of the bar light guider 13 in the light source unit 11, the light source unit in which the sections of the projections 16 are wedge-shaped and the section of the emitting face 13a is saw-toothed has been described. However, the prismatic shapes of the emitting face 13a are not restricted to the above-mention structure and any structure capable of effectively emitting the illumination light using the steep slope will do. Fig. 17 illustrates another example of the light source unit not according to the present invention, that is, the structure of the section of the front light including the light guider having the substantially rectangular emitting face on which the plurality of projections whose sections are substantially trapezoidal are arranged.

The light source unit 30 illustrated in Fig. 17 includes a bar light guider 32 having the partial sectional structure illustrated in Fig. 17 instead of the bar light guider 13 of the light source unit 11 illustrated in Figs. 12 and 13. The external appearance of the light source unit 30 is almost the same as the external appearance of the light source unit 11 illustrated in Fig. 12.

The lower face of the bar light guider 32 is an emitting face 32b. The face opposite to the emitting face 32b is a reflecting face 32c. A plurality of projections 34 that extends in the direction orthogonal to the plane of the drawing is arranged on the emitting face 32b. The reflecting face 32c is a flat plane. In each of the projection 34, a flat portion 34a is a top portion and a first slope (slope) 34b and a second slope 34c are formed on both sides in the direction of the width of the flat portion 34a so that the section of the projection 34 is substantially trapezoidal. The first slope 34b is inclined with respect to the horizontal reference plane z at the angle of inclination θ₂ and the second slope 34c is inclined at the angle of inclination θ₃. Also, the first slope 34b and the second slope 34c are inclined to the same side with respect to the normal ' line of the bar light guider 32. Between adjacent projections 34, bottom portions 34d formed as flat planes is provided. In the light source unit 30 according to the present embodiment, the plane regions of the emitting face 32b excluding the first and second slopes 34b and 34c are flat planes parallel to the horizontal reference plane z together with the flat portions 34a of the projections 34.

The angle of inclination θ₂ of the first slope 34b, similar to the angle of inclination θ₂ of the steep slope 14b illustrated in Fig. 15, generates the reflected light so as to form an obtuse angle θ₄ with respect to the propagated light incident on the first slopes 34b. The angle of inclination θ₃ of the second slopes 34c is preferably in the range of 40° to 60°. By having the angle of inclination θ₃ of the second slope 34c in the range of 40° to 60°, it is possible to reduce the quantity of the light that leaks from the first slope 34b and to improve the brightness of the light source unit 30. The pitch P of the projections 34 is preferably in the range of 0.1 mm to 0.4 mm.

When the projections 34 that constitute the bar light guider 32 are in the above-mentioned range, it is possible to emit the light that propagates inside the bar light guider 32 to the light guider without loss by total reflection of almost 100% and to realize a liquid crystal display device capable of bright and clear images.

According to the light source unit 30 of the present example having the above-mentioned structure, since it is possible to effectively reflect the light incident on the first slope 34b so that the illumination light can be made, it is possible to obtain illumination light of high brightness. Also, since the quantity of the light that is transmitted through the first slope 34b and is emitted to the opposite face 32c is reduced, when the illumination device including the light source unit 30 is applied to the liquid crystal display device, it is possible to prevent the contrast from deteriorating and to display high quality images. Also, since the plane regions of the emitting face 32b excluding the slopes 34b and 34c are flat planes, it is difficult for the light that propagates inside the bar light guider 32 to leak from the surfaces excluding the slopes. Therefore, it is possible to improve the use efficiency of the light source and to improve the brightness of the illumination light.

In the light source units 11 and 30 according to the above-mentioned examples, the thickness T (the distance between the top portions of the projections 16 and 34 and the reflecting faces 13b and 32c) of the bar light guiders 13 and 32 illustrated in Figs. 15 and 17 is uniform in the longitudinal direction of the bar light guiders 13 and 32, and the width L of the steep slope 16b and the first and second slopes 34b and 34c of the projections 16 and 34 is also uniformed in the emitting faces 13a and 32b. However, when the thickness T and the width L are changed in accordance with the distance from the light source, it is possible to uniform the illuminance of the light emitted from the emitting face of the bar light guider, which is more preferable.

Fig. 18 is a sectional view illustrating a light source unit according to an example in which the thickness T of the above-mentioned bar light guider is changed in accordance with the distance from the light source. For example, a light source unit 41 that emits light to a light guider 40 adjacent to the liquid crystal panel is composed of a bar light guider 42 and a light emission element (the light source) 43 as in the above-mentioned embodiment. The bar light guider 42 is a square rod-shaped transparent member made of transparent acryl resin. The light emission element (the light source) 43 is composed of one or a plurality of LEDs and is, for example, a point light source that radiates white light.

In the bar light guider 42, the side that faces an incident face 40a of the light guider 40 forms an emitting face 42a and the side opposite to the emitting face 42a forms a reflecting face 42b. On the emitting face 42a of the bar light guider 42, a plurality of projections 44 are formed so as to be parallel to each other and in stripes in plan view to form prismatic shapes and the reflecting face 42b opposite to the emitting face 42a is flat.

Each of the projections 44 formed on the emitting face 42a of the bar light guider 42, as in the above-mentioned embodiments, is composed of a pair of slopes inclined with respect to the horizontal reference plane z of the emitting face 42a and has its vertical section wedge-shaped. One of each of the slopes is a gentle slope 44a and the other one is a steep slope (a slope) 44b having an angle of inclination steeper than the angle of inclination of the gentle slope 44a. Also, the thickness of the bar light guider 42, which is expressed by the distance between the top portions of the projections 44 and the reflecting face 42b, is changed in accordance with the position of the longitudinal direction A of the bar light guider 42. That is, on both ends of the bar light guider 42 in its longitudinal direction A, the thickness of the bar light guider 42 is minimized as the thickness T1. The thickness of the bar light guider 42 is maximized as the thickness T2 from the position in which the thickness of the bar light guider 42 is T1 toward the center of the bar light guider 42 in its longitudinal direction A.

According to the change in the thickness of the bar light guider 42 in its longitudinal direction A, it is preferable that the thickness T1 be about 2.8 mm and the thickness T2 be about 3.0 mm and that the bar light guider 42 be gently swollen between the position in which the thickness of the bar light guider 42 is T1 and the position in which the thickness of the bar light guider 42 is T2. As mentioned above, when the thickness of the bar light guider 42 in its longitudinal direction A is changed in accordance with the distance from the light emission element (the light source) 43, the light emitted from the emitting face 42a to the light guider 40 can have uniform illuminance over the entire width of the emitting face 42a so that it is possible to prevent non-uniformity in brightness.

When the liquid crystal panel is illuminated by the light guider 40 using the light source unit 41, since it is possible to emit the light that propagates inside the bar light guider 42 to the light guider 40 without loss by the reflectance of almost 100%, it is possible to improve the visibility of the liquid crystal panel. Also, the present inventor testifies that it is possible to prevent the non-uniformity in the brightness by changing the thickness of the bar light guider 42 in its longitudinal direction A to make the quantity of the light emitted from the light source unit 41 uniform, which will be described in detail in examples as mentioned later.

Fig. 19 is a sectional view illustrating a light source unit according to an example in which the width L of the steep slope of the projection in the bar light guider is changed in accordance with the distance from the light source. A light source unit 51 that emits light to a light guider 50 adjacent to the liquid crystal display panel, as in the above-mentioned examples, is composed of a bar light guider 52 and a light emission element (a light source) 53. The bar light guider 53 is, for example, a square rod-shaped transparent member made of acryl resin. The light emission element (the light source) 53 is composed of one or a plurality of LEDs and is, for example, a point light source that radiates white light.

In the bar light guider 52, the side that faces an incident face 50a of the light guider 50 forms an emitting face 52a and the side opposite to the emitting face 52a forms a reflecting face 52b. On the emitting face 52a of the bar light guider 52, a plurality of projections 54 is parallel to each other and in stripes in plan view to form prismatic shapes and the reflecting face 52b opposite to the emitting face 52a is flat.

Each of the projections 54 formed on the emitting face 52a of the bar light guider 52, as in the above-mentioned examples, is composed of a pair of slopes inclined with respect to the horizontal reference plane z of the emitting face 52a and has its vertical section wedge-shaped. One of the slopes is a gentle slope 54a and the other one is a steep slope (a slope) 54b having an angle of inclination steeper than the angle of inclination of the gentle slope 54a.

Also, the width of the steep slope (the slope) 54b is changed in accordance with the position thereof in the longitudinal direction A of the bar light guider 52. That is, on the light emission element (the light source) 53 side of the bar light guider 52, the width of the steep slope 54b is minimized as the width L1. On the position remotest from the light emission element 53, the width of the steep slope (the slope) 54b is maximized as the width L2. The width of the steep slope 54 gradually increases from L1 to L2. Therefore, the width of the steep slope 54b increases toward the position remoter from the light emission element (the light source) 53.

According to the change in the width of the steep slope 54b in the longitudinal direction A of the bar light guider 52, it is preferable that the width L1 be about 10 µm and the width L2 be about 50 µm and that the width of the steep slopes 54b of the projections 54 formed between the position in which the width of the steep slope 54b is L1 and the position in which the width of the steep slope 54b is L2 gradually increase. As mentioned above, since the width of the steep slopes 54b gradually increases toward the position remoter from the light emission element (the light source) 53, the light emitted from the emitting face 52a to the light guider 50 can have uniform illuminance over the entire width of the emitting face 52a so that it is possible to prevent non-uniformity in brightness.

When the liquid crystal panel is illuminated by the light guider 50 using the light source unit 51, since it is possible to emit the light that propagates inside the bar light guider 52 to the light guider 50 without loss by the reflectance of almost 100%, it is possible to improve the visibility of the liquid crystal panel. Also, the present inventor testifies that it is possible to prevent the non-uniformity in the brightness by changing the width of the steep slopes 54b of the projections 54 to make the quantity of the light emitted from the light source unit 51 uniform, which will be described in detail in embodiments as mentioned later.

### [Examples]

Hereinafter, the effects of the present invention are made clear by preferred examples. However, the technical scope of the present invention is not restricted by the following example.

### (Example 1)

According to the present example, the quantity of emitted light and the quantity of leaking light when the angle of inclination of the slopes for emitting propagated light is optimized with respect to the incident angle of the propagated light in the light guider of a new shape according to the present invention illustrated in Figs. 1 to 3 and the quantity of emitted light and the quantity of leaking light when the angle of inclination of the slopes for emitting propagated light is optimized with respect to the incident angle of the propagated light in the light guider of a conventional shape illustrated in Fig. 20 are compared with each other.

Table 1 represents the parameters of the respective parts of the light guiders compared with each other in the present example. In the table, the new shape refers to the light guider illustrated in Fig. 3 and the conventional shape refers to the light guider illustrated in Fig. 20. Also, in the new shape, θ₁ and θ₂ denote the angles of inclination illustrated in Fig. 3. In the conventional shape, θ₁ and θ₂ denote the angles of inclination illustrated in Fig. 20. The size of the light guiders is 70 mm (W) × 50 mm (L) × 1.0 mm (t) in common and the material of the light guiders is acryl resin (the refractive index of the light guiders is 1.48).

Next, under the above-mentioned conditions, when a light flux of 1 Lumen is incident from the incident faces of the respective light guiders, the results of calculating the light flux emitted to the LCD (the liquid crystal panel) and the light flux emitted to the observer side are represented together in Table 1. As clear from Table 1, in the light guider of the new shape having the structure of the present invention, the light flux emitted to the LCD significantly increases as compared with the light flux in the conventional light guider and the light flux that leaks to the observer side is remarkably reduced. In particular, it was confirmed that, when the angle of inclination θ₂ of the steep slope 14b is in the range of 45° to 50°, it is possible to obtain a light guider having high illumination brightness and a small quantity of leaking light.

**[TABLE 1]**

| | θ₁ (°) | θ₂ (°) | Pitch (µm) | Light Flux (Lumen) | |
|---|---|---|---|---|---|
| | | | | LCD Side | Observer Side |
| New shape | 2.8 | 40 | 0.2 | 0.770 | 0.063 |
| ↑ | 2.8 | 45 | 0.2 | 0.800 | 0.043 |
| ↑ | 2.8 | 50 | 0.2 | 0.790 | 0.032 |
| ↑ | 2.8 | 60 | 0.2 | 0.740 | 0.090 |
| Conventional shape | 2.8 | 45 | 0.2 | 0.540 | 0.150 |

### (Example 2)

Next, the reflection characteristics for the propagated light incident from the inside of the light guider in the projections 14 formed on the emitting face 12b of the light guider 12 according to the present invention illustrated in Fig. 3 were compared with the reflection characteristics for the propagated light incident from the inside of the light guider in the projections 114 formed on the upper face of the conventional light guider 112 illustrated in Fig. 20. Comparison results are represented in Tables 2 to 5. Tables 2 and 3 represent the reflection characteristics of the light guider of the new shape that is the light guider according to the present invention. Tables 4 and 5 represent the reflection characteristics of the light guider of the conventional shape. Tables 2 and 4 also represent the results when the light guider is made of atone (Trade name: made by JSR company). Tables 3 and 5 represent the results when the light guider is made of acryl resin.

In the tables, the incident angle corresponds to the angle θ₆ illustrated in Fig. 4, which is an angle of the light incident from the inside of the light guider 12 on the steep slope 14b with respect to the horizontal reference plane z. Also, with respect to the positive or negative of the incident angle, the incident angle of the light that travels from the inside of the light guider toward the steep slope 14b is taken as positive. Even if the positive or negative of the incident angle in the light guider of the new shape is the same as the positive or negative of the incident angle in the light guider the conventional shape, the angle of the light from the upper face of the light guider to the lower face of the light guider is represented in the light guider of the new shape and the angle of the light from the lower face of the light guider to the upper face of the light guider is represented in the light guider of the conventional shape. According to the present invention, the incident angle is changed in the range of 0° to 8°.

The angle of inclination represents the angle of inclination θ₂ of the steep slope 14b in Tables 2 and 3, the angle of inclination θ₂ of the steep slope 114b illustrated in Fig. 20 in Tables 4 and 5, and the angle of inclination at which the light incident at the respective incident angles is reflected in the direction orthogonal to the light guider (in the direction of the normal line of the horizontal reference plane z) in this example.

A relief angle represents the difference between the incident angle of the propagated light incident on the steep slope and a critical angle of the light guider when the angle of inclination θ₂ of the steep slope is set so as to generate the reflected light in the direction orthogonal to the light guider with respect to the incident angle. When the relief angle is negative, the incident angle is smaller than the critical angle so that the light is transmitted through the steep slopes and becomes leaking light.

**[TABLE 2] <New shape 1>**

| | | | | | | | | | |
|---|---|---|---|---|---|---|---|---|---|
| Incident angle θ₆ (°) | 0 | 1 | 2 | 3 | 4 | 5 | 6 | 7 | 8 |
| Angle of inclination θ₂ (°) | 45 | 45.5 | 46 | 46.5 | 47 | 47.5 | 48 | 48.5 | 49 |
| Relief angle (°) | 3.86 | 3.36 | 2.86 | 2.36 | 1.88 | 1.36 | 0.86 | 0.36 | -0.14 |

| | | | | | | | | | |
|---|---|---|---|---|---|---|---|---|---|
| Material: Atone/Refractive Index: 1.52/Critical angle: 41.14° | | | | | | | | | |

**[TABLE 3] <New shape 2>**

| | | | | | | | | | |
|---|---|---|---|---|---|---|---|---|---|
| Incident angleθ₆ (°) | 0 | 1 | 2 | 3 | 4 | 5 | 6 | 7 | 8 |
| Angle of inclination θ₂ (°) | 45 | 45.5 | 46 | 46.5 | 47 | 47.5 | 48 | 48.5 | 49 |
| Relief angle (°) | 2.49 | 1.99 | 1.49 | 0.99 | 0.49 | -0.01 | -0.51 | -1.01 | -1.51 |

| | | | | | | | | | |
|---|---|---|---|---|---|---|---|---|---|
| Material: Acryl/Refractive Index: 1.48/Critical angle: 42.51° | | | | | | | | | |

**[TABLE 4] <Conventional shape 1>**

| | | | | | | | | | |
|---|---|---|---|---|---|---|---|---|---|
| Incident angleθ₁ (°) | 0 | -1 | -2 | -3 | -4 | -5 | -6 | -7 | -8 |
| Angle of inclination θ₂ (°) | 45 | 44.5 | 44 | 43.5 | 43 | 42.5 | 42 | 41.5 | 41 |
| Relief angle (°) | 3.86 | 2.36 | 0.86 | -0.64 | -2.14 | -3.64 | -5.14 | -6.64 | -6.14 |

| | | | | | | | | | |
|---|---|---|---|---|---|---|---|---|---|
| Material: Atone/Refractive Index: 1.52/Critical angle: 41.14° | | | | | | | | | |

**[TABLE 5] <Conventional shape 2>**

| | | | | | | | | | |
|---|---|---|---|---|---|---|---|---|---|
| Incident angle θ₁ (°) | 0 | -1 | -2 | -3 | -4 | -5 | -6 | -7 | -8 |
| Angle of inclination θ₂ (°) | 45 | 44.5 | 44 | 43.5 | 43 | 42.5 | 42 | 41.5 | 41 |
| Relief angle (°) | 2.49 | 0.99 | -0.51 | -2.01 | -3.51 | -5.01 | -6.51 | -8.01 | -9.51 |

| | | | | | | | | | |
|---|---|---|---|---|---|---|---|---|---|
| Material: Acryl/Refractive Index: 1.48/Critical angle: 42.51°. | | | | | | | | | |

As illustrated in Tables 2 to 5, in the light guider of the new shape invention having the structure of the present invention, the range of the incident angle in which the relief angle is positive is larger than the range in the light guider of the conventional shape. That is, in the light guider of the new shape, in the distribution of the angles of the propagated light incident on the steep slopes, it is possible to reflect the propagated light at a larger range of angles and to improve the brightness of illumination.

### (Example 3)

According to the present example, the brightness and the contrast of the liquid crystal display device using the light guider of the new shape illustrated in Figs. 1 to 3 were compared with the brightness and the contrast of the liquid crystal display device using the light guider of the conventional shape.

In the light guider of a new shape 3, the angle of inclination θ₁ is 2.8° and the angle of inclination θ₂ is 45° as illustrated in Fig. 3, the size of the light guider is 70 mm (W) × 50 mm (L) × 1.0 mm (t), the material is acryl resin (the refractive index is 1.48), the resultant material obtained by curing a urethane acrylate-based hard coating agent to a thickness of 500Å (50 nm) with ultraviolet (UV) rays was used as the protective layer laminated on the light guider.

In the light guider of the conventional shape 3, the angle of inclination θ₁ is 2.8° and the angle of inclination θ₂ is 45° as illustrated in Fig. 20, the size of the light guider is 70 mm (W) × 50 mm (L) × 1.0 mm (t), and the material is acryl resin (the refractive index is 1.48). Acryl having a thickness of 1.2 mm is used as the front light cover. The light guider in which the front light cover is omitted was used.

In the light guider of the conventional shape 4, the angle of inclination θ₁ is 2.8° and the angle of inclination θ₂ is 45° as illustrated in Fig. 20, the size of the light guider is 70 mm (W) × 50 mm (L) × 1.0 mm (t), and the material is acryl resin (the refractive index is 1.48). Acryl having a thickness of 1.2 mm is used as the front light cover.

Next, under the above-mentioned conditions, the brightness and the contrast of the liquid crystal display device using the light guider of the new shape illustrated in Figs. 1 to 3 were compared with the brightness and the contrast of the liquid crystal display device using the light guider of the conventional shape. The contrast was measured in a state where external light exists and the front light is turned on. The brightness is the value obtained when the brightness of the conventional shape 3 is 100. The contrast is the value obtained when the contrast of the liquid crystal display device is 100. The results are represented in Table 6.

**[TABLE 6]**

| | Brightness | Contrast |
|---|---|---|
| New shape 2 | 130 | 45 |
| Conventional shape 3 | 100 | 25 |
| Conventional shape 4 | 90 , | 25 |

As shown in Table 6, it is understood that the liquid crystal display device using the light guider of the new shape 3 is superior to the conventional shapes 3 and 4 with respect to both the brightness and the contrast. As mentioned above, according to the light guider of the new shape 3, the front cover is not necessary so that it is possible to make the illumination device thin.

### (Example 4)

According to another comparative example the light guider 12 of the structure illustrated in Fig. 10 was prepared. As samples of the present invention, six samples in which the angle of inclination θ₁ of the first slope 14a of the light guider 12 is set to 2.3°, the angle of inclination θ₂ of the second slope 14b of the light guider 12 is set to 35° to 45°, and the angle of inclination θ₃ of the third slope 14c of the light guider 12 is set to -3°, 0°, and 5° were prepared.

On the other hand, as a comparative example, the light guider disclosed in Japanese Unexamined Patent Application Publication No. 2001-126494 was prepared as a sample of a conventional example.

The Light from the light sources of the same brightness was incident on the six samples that are the examples of the present work and on the conventional sample as described above and the brightness and the contrast of the emitted light were measured. The results of measuring the brightness and the contrast of the above-mentioned example 4 are represented in Table 7. The item of the brightness represents the ratios of the brightness of the respective samples when the brightness of the light emitted from the light guider according to the conventional example is 100.

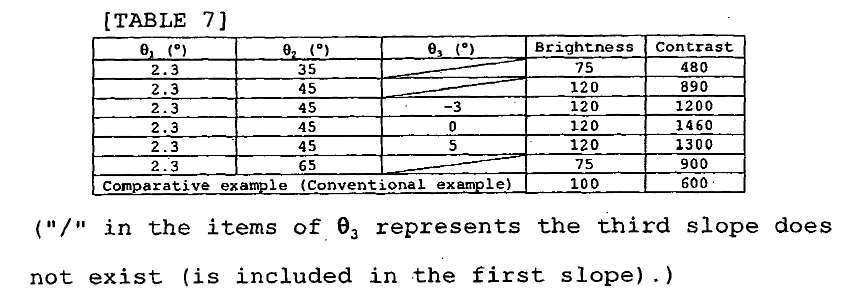

As clear from Table 7, it was confirmed that the brightness of the emitted light increases by forming the third slope 14c in the projection 14. Also, it was proved that the contrast significantly increases.

### (Example 5)

Also, as another comparative example, a light guider 13 having the same structure as that of the example illustrated in Figs. 12 and 13 was prepared. As samples of the present work, five samples in which the angle of inclination θ₁ of the gentle slope 16a of the bar light guider 13 is set to 2.3° and the angle of inclination θ₂ of the steep slope 16b is changed in the range of 35° to 50° in units of 5° and a sample in which the angle of inclination θ₂ is set to 65° was prepared.

On the other hand, as a comparative example, a bar light guider in which a groove whose section is V-shaped is formed on the face opposite to the emitting face that faces the side end face (the incident face) of the light guider, which is disclosed in Japanese Unexamined Patent Application Publication No. 2001-126494, is provided as a sample of the conventional example.

Light from the light sources of the same brightness was incident on the six bar light guiders 13 that are the examples of the present work prepared as described above and on the conventional bar light guider and the brightness of the emitted light were measured. The results of measuring the brightness according to the first example are represented in Table 8. The items of the brightness represent the ratios of the brightness of the respective samples when the brightness of the light emitted from the bar light guider according to the conventional example is 100.

**[TABLE 8]**

| θ₁ (°) | θ₂ (°) | Brightness |
|---|---|---|
| 2.3 | 35 | 85 |
| 2.3 | 40 | 105 |
| 2.3 | 45 | 120 |
| 2.3 | 50 | 120 |
| 2.3 | 55 | 110 |
| 2.3 | 65 | 85 |
| Comparative Example (Conventional Example) | | 100 |

As clear from Table 8, it was confirmed that it is possible to improve the brightness of the emitted light as compared with the conventional front light by setting the angle of inclination θ₂ of the steep slope 16b to 40° to 55° as in the front light (the illumination device). In particular, it was proved that the emitted light of the brightness 1.2 times larger than the brightness of the conventional front light is obtained when the angle of inclination θ₂ is set to 45° to 50°.

### (Example 6)

Also, as another comparative example, a bar light guider 32 having the same structure as that of the example illustrated in Fig. 17 was prepared. As samples of the present work five samples in which the angle of inclination θ₂ of the first slope 34b of the bar light guider 32 and the angle of inclination θ₃ of the second slope 34b is changed in the range of 35° to 50° in units of 5° and a sample in which the angles of inclination θ₂ and θ₃ are 65° was prepared.

On the other hand, as a comparative example, a bar light guider in which a groove whose section is V-shaped is formed on the face opposite to the emitting face that faces the side end face (the incident face) of the light guider, which is disclosed in Japanese Unexamined Patent Application Publication No. 2002-324424 as in the first embodiment, was prepared as a sample of the conventional example.

Light from the light sources of the same brightness was incident on the six bar light guiders 32 that are the examples of the present work prepared as described above and on the conventional bar light guider and the brightness of the emitted light were measured. The results of measuring the brightness according to the sixth example are represented in Table 9. The items of the brightness represent the ratios of the brightness of the respective samples when the brightness of the light emitted from the bar light guider according to the conventional example is 100.

**[TABLE 9]**

| θ₂, θ₃ (°) | Brightness |
|---|---|
| 35 | 81 |
| 40 | 104 |
| 45 | 118 |
| 50 | 121 |
| 55 | 109 |
| 65 | 84 |
| Comparative Example (Conventional Example) | 100 |

As clear from Table 9, it was confirmed that it is possible to improve the brightness of the emitted light as compared with the conventional front light by setting the angle of inclination θ₂ of the first slope 34b of the bar light guider 32 and the angle of inclination θ₃ of the second slope 34c of the bar light guider 32 to 40° to 55° as in the front light (the illumination device). In particular, it was proved that the emitted light of the brightness 1.2 times larger than the brightness of the conventional front light is obtained when the angles of inclination θ₂ and θ₃ are set to 45° to 50°.

### (Example 7)

Also, as another comparative example a bar light guider 42 having the same structure as that of Fig. 18 was prepared. As samples of the present work, three samples in which the maximum thickness T2 of the bar light guider'42 is set to 3.0 mm and the minimum thickness T1 of the bar light guider 42 is set to 2.95 mm, 2.80 mm, and 2.50 mm were prepared.

On the other hand, as a comparative example, a bar light guider in which a groove whose section is V-shaped is formed, which is disclosed in Japanese Unexamined Patent Application Publication No. 2002-324424 as in the above-mentioned examples, was provided as a sample of the conventional example.

Light from the light sources of the same brightness was incident on the three bar light guiders 42 that are the examples of the present work and on the conventional bar light guider and the brightness of the emitted light and the non-uniformity in the brightness were measured. The results of measuring the brightness and the non-uniformity in the brightness according to the seventh example are represented in Table 10. The items of the brightness represent the ratios of the brightness of the respective samples when the brightness of the light emitted from the bar light guider according to the conventional example is 100. The items of the non-uniformity in the brightness are percentages obtained by dividing the minimum values of the brightness of the emitted light by the maximum values and multiplying 100 by the obtained values.

**[TABLE 10]**

| T1 (mm) | T2 (mm) | Brightness | Non-uniformity in Brightness (%) |
|---|---|---|---|
| 2.95 | 3.00 | 100 | 65 |
| 2.80 | 3.00 | 110 | 75 |
| 2.50 | 3.00 | 110 | 55 |
| Comparative Example (Convention Example) | | 100 | 60 |

| | | | |
|---|---|---|---|
| (θ₁=2.3°, θ₂=50°) | | | |

As clear from Table 10, it was confirmed that it is possible to improve the brightness of the emitted light and to reduce the non-uniformity in the brightness as compared with the conventional front light by changing the thickness of the bar light guider 42 as in the front light (the illumination device) shown here. In particular, it was proved that the emitted light of the brightness 1.1 times larger than the brightness of the conventional front light is obtained when the minimum thickness T1 is set to be in the range of 2.80 mm to 2.50 mm when the maximum thickness T2 is 3.0 mm. Also, it was proved that the non-uniformity in the brightness is significantly improved when the minimum thickness T1 is about 2.80 mm.

### (Example 8)

Also, as another comparative example, a bar light guider 52 having the same structure as that of Fig. 19 was prepared. As samples of the present work, three samples in which the minimum width L1 of steep slope 54b of the bar light guider 52 is set to 10 µm and the maximum width L2 of the steep slope 54b of the bar light guider 52 is set to 10 µm, 50 µm, and 70 µm was prepared.

On the other hand, as a comparative example, a bar light guider in which a groove whose section is V-shaped is formed, which is disclosed in Japanese Unexamined Patent Application Publication No. 2002-324424 as in the above-mentioned examples, was provided as a sample of the conventional example.

Light from the light sources of the same brightness was incident on the three bar light guiders 52 that are the examples of the present work and on the conventional bar light guider and the brightness of the emitted light and the non-uniformity in the brightness were measured. The results of measuring the brightness and the non-uniformity in the brightness according to the eighth example are represented in Table 11. The items of the brightness represent the ratios of the brightness of the respective samples when the brightness of the light emitted from the bar light guider according to the conventional example is 100. The items of the non-uniformity in the brightness are percentages obtained by dividing the minimum values of the brightness of the emitted light by the maximum values and multiplying 100 by the obtained values.

**[TABLE 11]**

| L1 (mm) | L2 (mm) | Brightness | Non-uniformity in Brightness (%) |
|---|---|---|---|
| 10 | 30 | 100 | 65 |
| 10 | 50 | 120 | 75 |
| 10 | 70 | 125 | 55 |
| Comparative Example (Convention Example) | | 100 | 60 |

| | | | |
|---|---|---|---|
| (θ₁=2.3°, θ₂=50°) | | | |

As clear from Table 11, it was confirmed that it is possible to improve the brightness of the emitted light and to reduce the non-uniformity in the brightness as compared with the conventional front light by increasing the width of the steep slope 54b of the bar light guider 52 toward the position remoter from the light source as in the front light (the illumination device) described here. In particular, it was proved that the brightness of the emitted light is increased as compared with the conventional front light by setting the maximum width L2 of the steep slopes 54b to be larger. Also, it was proved that the non-uniformity in the brightness is significantly improved when the maximum width L2 of the steep slope 54b is about 50 µm.

As mentioned above in detail, according to the light guider of the present invention, since the angle formed by the direction in which the propagated light travels and the direction in which the reflected light of the propagated light travels is an obtuse angle, it is possible to effectively prevent the light from being transmitted through the light guider and leaking and to increase the quantity of the light that is reflected by the slopes and illuminates an illuminated subject. Therefore, it is possible to provide an illumination device of high brightness.

Also, according to the illumination device of the present invention, since the protective layer is laminated on the face opposite to the emitting face of the light guider, it is possible to prevent the light guider from being damaged. Also, it is possible to omit the front light cover by laminating the protective layer and to reduce the number of parts.

Also, since the protective layer is directly laminated on the light guider, the air layer is not formed between the light guider and the protective layer. Therefore, the quantity of the backward scattered light is reduced unlike in the conventional art so that it is possible to improve the brightness.

Also, since the protective layer is made thinner than the conventional front light cover, it is possible to reduce the quantity of the light absorbed into the protective layer itself and to improve the brightness.

Also, since the prismatic shapes are formed on the emitting face, it is possible to effectively prevent the light that propagates inside the light guider from leaking from the face opposite to the emitting face. Therefore, when the illumination device having the above-mentioned structure is used as the front light of the display device, it is possible to significantly reduce the quantity of the leaking light in the front direction of the display device and to display images with high contrast. Also, since the face opposite to the emitting face of the light guider can be made flat, when the illumination device is applied to the front light of the display device, the flat plane is arranged on the display surface side so that it is possible to protect the prismatic shapes.

Also, according to the light guider of the present invention, it is possible to reflect the leaking light caused by re-reflecting a part of the reflected light of the second slope to the light guider at an angle that significantly deviates from the direction orthogonal to the reference plane. Therefore, when the light guider is applied to the liquid crystal display device, it is possible to significantly improve the visibility. Also, in the light guider according to the present invention, minute prismatic shapes are formed on the surface (observer side), it is possible to prevent the minute prismatic shapes from being damaged by touching and striking the surface.

When the angle of inclination of the first slope with respect to the reference plane is set to be in the range of 0.5° to 5.0°, the angle of inclination of the second slope with respect to the reference plane is set to be in the range of 40° to 60°, and the angle of inclination of the third slope with respect to the reference plane is set to be in the range of -5° to 10°, it is possible to effectively emit the light that propagates inside the light guider. Therefore, it is possible to emit bright illumination light and to reflect the leaking light at an angle that significantly deviates from the direction orthogonal to the reference plane.

Also, according to the illumination device including the above-mentioned light guider and light source, it is possible to provide an illumination device capable of emitting bright illumination light to an illuminated subject and of minimizing the quantity of the leaking light that deteriorates the visibility. According to the liquid crystal display device including the illumination device and the liquid crystal panel, it is possible to provide a liquid crystal display device with higher brightness, higher contrast, and higher visibility than those of a conventional liquid crystal display device. The light guider according to the present invention can be suitably used for an active-matrix liquid crystal display device as well as for a simple-matrix liquid crystal display device.

Also, according to the light source unit of the present invention, it is possible to emit the light incident on the bar light guider and propagates inside the bar light guider without loss by the reflectance of almost 100%. Also, it is possible to significantly improve the illuminance of the light radiated from the emitting face. When the prismatic shapes are composed of the plurality of projections formed on the emitting face, the slopes are formed in the projections in the direction where the propagated light travels, and the angle formed by the direction in which the propagated light incident on the slopes travels and the direction in which the reflected light of the propagated light travels is an obtuse angle, the quantity of the light reflected by the slopes increases so that it is possible to increase the quantity of the light emitted from the emitting face.

When the angle of inclination of the slopes increases toward the portion remoter from the light source and the size of the projections increases toward the portion remoter from the light source, it is possible to uniform the illuminance of the light emitted from the emitting face over the entire width of the emitting face and to prevent the non-uniformity in the brightness from occurring.

When the insides of the slopes are formed so as to face the external side of the emitting face, the sections of the projections whose top portions are flat are substantially trapezoidal, and the sections of the projections are wedge-shaped, it is difficult the light from leaking from the surfaces excluding the slopes so that it is possible to improve the use efficiency of the light source and to improve the brightness of the illumination light. The angle of inclination of the slopes is preferably set to be in the range of 40° to 60°.

When the above-mentioned light source unit is applied to the illumination device including the light guider that propagates the light emitted from the light source unit and radiates the propagated light onto the illuminated subject, it is possible to significantly improve the illuminance of the light emitted from the illumination device. Also, when the illumination device is applied to a simple matrix or active matrix liquid crystal display device, it is possible to reduce the non-uniformity in the illumination of the liquid crystal panel and to realize a liquid crystal display device capable of displaying clear images with excellent visibility.

## Claims

1. A laminar light guider (12) adapted to introduce the light of a light source (10) from a side end face to the inside and to emit the light that propagates inside the light guider (12) from a prismatic emitting face, the prismatic emitting face having a plurality of projections (14), a top portion of each projection extending away from the light source, the projections having sections that are wedge-shaped and each comprising a first slope (14a) inclined with respect to a reference plane (z) being parallel to a main surface of the light guider (12) and a second slope (14b) inclined with respect to the reference plane at an angle steeper than the first slope, the angle of inclination of each first slope (14a) with respect to the reference plane being in the range of from 0.5° to 5°, the angle of inclination of each second slope (14b) with respect to the reference plane being in the range of from 40° to 60°, and the pitch of the projections (14) being in the range of from 0.1 mm to 0.4 mm, wherein a protective layer (25) is laminated on a face opposite to the prismatic emitting face of the light guider (12).

2. A light guider according to Claim 1, wherein the protective layer (35) is a reflection-preventing layer.

3. A light guider according to Claim 1, wherein the protective layer (35) is made of a transparent material layer.

4. A light guider according to Claim 1, wherein the protective layer (35) is formed of a multi-layer film including a dielectric layer.

5. A light guider according to any preceding claim wherein each of said projections (14) has a third slope (14c) for connecting the first slope to the second slope and in that the angle of inclination of the third slope (14c) with respect to the reference plane is in the range of -5° to 10°.

6. An illumination device wherein it includes the light guider of any preceding Claim and a light source (10).

7. An illumination device according to Claim 7, wherein the light source comprises:
a bar light guider (13) arranged along the side end face of the light guider; and
a light emission element arranged on the end face of the bar light guider (13).

8. A liquid crystal display device comprising an illumination device according to Claim 6 and liquid crystal panel, the illumination device being provided on the front surface of the liquid crystal panel.

9. A light source unit, comprising: a light guider according to any one of Claims 1 to 5 and a light source (10), further wherein a bar light guider (13) for introducing the light of the light source (10) from an incident face on the side end of the light guider to the inside of the light source unit and emitting light from an emitting face, and the emitting face of the bar light guider being adjacent to the light guider for supplying light to the light guider that illuminates an illuminated subject,
wherein prismatic shapes for reflecting and emitting propagated light inside the bar light guider (13) are formed on the emitting face of the bar light guider (13).

10. A light source unit according to Claim 9, wherein the prismatic shapes are composed of a plurality of projections (14) formed on the emitting face of the bar light guider in that slopes are formed in the projections where the propagated light travels and in that a top portion of each projection extrudes away from the light source (10).

11. A light source unit according to Claim 10, wherein the angle of inclination of the slopes of the projections (14) increases toward the position remoter from the light source.

12. A light source unit according to Claim 10, wherein the size of the projections (14) increases toward the position remoter from the light source (10).

13. A light source unit according to Claim 10, wherein the sections of the bar light guider projections (14) whose top portions are flat are substantially trapezoidal.

14. A light source unit according to Claim 10, wherein the sections of the bar light guider projections (14) are wedge-shaped.

15. A light source unit according to Claim 10, wherein the angle of inclination of the slopes of the bar light guider projections is set to be in the range of 40° to 60°.

## Patentansprüche

1. Flächenhafter Lichtleiter (12), dazu ausgelegt, das Licht einer Lichtquelle (10) von einer Seitenendfläche zu dem Inneren einzuführen und das Licht, das innerhalb des Lichtleiters (12) propagiert, von einer Prismenemissionsfläche zu emittieren, wobei die Prismenemissionsfläche eine Mehrzahl von Vorsprüngen (14) hat, wobei sich ein Endbereich jedes Vorsprungs weg von der Lichtquelle erstreckt, wobei die Vorsprünge Schnitte haben, die keilförmig sind, und jeweils eine in Bezug auf eine zu einer Hauptoberfläche des Leichtleiters (12) parallele Referenzebene (z) geneigte erste Flanke (14a) und eine in Bezug auf die Referenzebene mit einem steileren Winkel als die erste Flanke geneigte zweite Flanke (14b) aufweisen, wobei der Neigungswinkel jeder ersten Flanke (14a) in Bezug auf die Referenzebene im Bereich von 0,5° bis 5° ist, der Neigungswinkel jeder zweiten Flanke (14b) in Bezug auf die Referenzebene im Bereich von 40° bis 60° ist und die Teilung der Vorsprünge (14) im Bereich on 0,1 mm bis 0,4 mm ist, wobei eine Schutzschicht (25) an eine Fläche entgegengesetzt der Prismenemissionsfläche des Lichtleiters (12) laminiert ist.

2. Lichtleiter nach Anspruch 1, wobei die Schutzschicht (35) eine Relexionsvermeidungsschicht ist.

3. Lichtleiter nach Anspruch 1, wobei die Schutzschicht (35) aus einem transparenten Materialschicht gebildet ist.

4. Lichtleiter nach Anspruch 1, wobei die Schutzschicht (35) aus einem eine dielektrische Schicht aufweisenden Mehrschichtenfilm gebildet ist.

5. Lichtleiter nach einem der vorangehenden Ansprüche, wobei jeder der Vorsprünge (14) eine dritte Flanke (14c) zum Verbinden der ersten Flanke mit der zweiten Flanke hat und wobei der Neigungswinkel der dritten Flanke (14c) in Bezug auf die Referenzebene im Bereich von -5° bis 10° ist.

6. Beleuchtungsvorrichtung, die den Lichtleiter gemäß einem der vorangehenden Ansprüche und eine Lichtquelle (10) aufweist.

7. Beleuchtungsvorrichtung nach Anspruch 6, wobei die Lichtquelle aufweist:
einen Stablichtleiter (13), der entlang der Seitenendfläche des Lichtleiters angeordnet ist; und
ein Lichtemissionselement, das an der Endfläche des Stablichtleiters (13) angeordnet ist.

8. Flüssigkristallanzeigevorrichtung, aufweisend eine Beleuchtungsvorrichtung gemäß Anspruch 6 und ein Flüssigkristallpaneel, wobei die Beleuchtungsvorrichtung an der Frontoberfläche des Flüssigkristallpaneels vorgesehen ist.

9. Lichtquelleneinheit, aufweisend: einen Lichtleiter gemäß einem der Ansprüche 1 bis 5 und eine Lichtquelle (10), wobei ferner ein Stablichtleiter (13) zum Einführen des Lichts der Lichtquelle (10) von einer Einfallsfläche an dem Seitenende des Lichtleiters zu dem Inneren der Lichtquelleneinheit und Emittieren von Licht von einer Emissionsfläche vorgesehen ist und wobei die Emissionsfläche des Stablichtleiters zu dem Lichtleiter zum Zuführen von Licht zu dem Lichtleiter, der einen Beleuchtungsgegenstand beleuchtet, benachbart ist,
wobei Prismenformen zum Reflektieren und Emittieren propagierten Lichts innerhalb des Stablichtleiters (13) an der Emissionsfläche des Stablichtleiters (13) ausgebildet sind.

10. Lichtquelleneinheit nach Anspruch 9, wobei die Prismenformen aus einer Mehrzahl von Vorsprüngen (14), die an der Emissionsfläche des Stablichtleiters ausgebildet sind, gebildet sind, wobei Flanken an den Vorsprüngen, wo sich das propagierte Licht bewegt, ausgebildet sind, und wobei ein Endbereich jedes Vorsprungs weg von der Lichtquelle (10) ragt.

11. Lichtquelleneinheit nach Anspruch 10, wobei der Neigungswinkel der Flanken der Vorsprünge (14) hin zu der Position entfernter von der Lichtquelle zunimmt.

12. Lichtquelleneinheit nach Anspruch 10, wobei die Größe der Vorsprünge (14) hin zu der Position entfernter von der Lichtquelle (10) zunimmt.

13. Lichtquelleneinheit nach Anspruch 10, wobei die Schnitte der Stablichtleitervorsprünge (14), deren Endbereiche eben sind, im Wesentlichen trapezoidal sind.

14. Lichtquelleneinheit nach Anspruch 10, wobei die Schnitte der Stablichtleitervorsprünge (14) keilförmig sind.

15. Lichtquelleneinheit nach Anspruch 10, wobei der Neigungswinkel der Flanken der Stablichtleitervorsprünge im Bereich von 40° bis 60° ist.

## Revendications

1. Guide de lumière (12) laminaire, conçu pour introduire la lumière d'une source lumineuse (10) à partir d'une face d'extrémité latérale vers l'intérieur, et pour émettre la lumière qui se propage à l'intérieur du guide de lumière (12) à partir d'une face émettrice prismatique, la face émettrice prismatique ayant une pluralité de saillies (14), une partie supérieure de chaque saillie s'éloignant de la source lumineuse, les saillies ayant des sections qui sont cunéiformes, et chacune comprenant une première pente (14a) inclinée par rapport à un plan de référence (z) qui est parallèle à une surface principale du guide de lumière (12), et une deuxième pente (14b) inclinée par rapport au plan de référence selon un angle plus aigu que celui de la première pente, l'angle d'inclinaison de chaque première pente (14a) par rapport au plan de référence se trouvant dans la plage de 0,5° à 5°, l'angle d'inclinaison de chaque deuxième pente (14b) par rapport au plan de référence se trouvant de la plage de 40° à 60°, et le pas des saillies (14) se trouvant de la plage de 0,1 mm à 0,4 mm, dans lequel une couche protectrice (25) est stratifiée sur une face opposée à la face émettrice prismatique du guide de lumière (12).

2. Guide de lumière selon la revendication 1, dans lequel la couche protectrice (35) est une couche empêchant la réflexion.

3. Guide de lumière selon la revendication 1, dans lequel la couche protectrice (35) est réalisée à partir d'une couche de matière transparente.

4. Guide de lumière selon la revendication 1, dans lequel la couche protectrice (35) est constituée d'un film multicouche incluant une couche diélectrique.

5. Guide de lumière selon l'une quelconque des revendications précédentes, dans lequel chacune desdites saillies (14) a une troisième pente (14c), permettant de relier la première pente à la deuxième pente, et en ce que l'angle d'inclinaison de la troisième pente (14c) par rapport au plan de référence se trouve dans la plage de -5° à 10°.

6. Dispositif d'éclairage, qui inclut un guide de lumière selon l'une quelconque des revendications précédentes, et une source lumineuse (10).

7. Dispositif d'éclairage selon la revendication 7, dans lequel la source lumineuse comprend :
un guide de lumière de type barre (13), agencé le long de la face d'extrémité latérale du guide de lumière ; et
un élément émetteur de lumière agencé sur la face d'extrémité du guide de lumière de type barre (13).

8. Dispositif d'affichage à cristaux liquides, comprenant un dispositif d'éclairage selon la revendication 6, et un écran à cristaux liquides, le dispositif d'éclairage étant prévu sur la surface avant de l'écran à cristaux liquides.

9. Unité de source lumineuse, comprenant : un guide de lumière selon l'une quelconque des revendications 1 à 5, et une source lumineuse (10), et comprenant en outre un guide de lumière de type barre (13), permettant d'introduire la lumière de la source lumineuse (10) à partir d'un face incidente sur l'extrémité latérale du guide de lumière vers l'intérieur de l'unité de source lumineuse, et d'émettre la lumière à partir d'un face émettrice, et la face émettrice du guide de lumière de type barre étant adjacente au guide de lumière pour délivrer la lumière au guide de lumière qui éclaire un objet éclairé,
dans laquelle les formes prismatiques permettant de réfléchir et d'émettre la lumière propagée à l'intérieur du guide de lumière de type barre (13) sont formées sur la face émettrice du guide de lumière de type barre (13).

10. Unité de source lumineuse selon la revendication 9, dans laquelle les formes prismatiques sont constituées d'une pluralité de saillies (14) formées sur la face émettrice du guide de lumière de type barre, en ce que les pentes sont formées dans les saillies où passe la lumière propagée, et en ce qu'une partie supérieure de chaque saillie s'écarte de la source lumineuse (10).

11. Unité de source lumineuse selon la revendication 10, dans laquelle l'angle d'inclinaison des pentes des saillies (14) augmente en direction de la position plus éloignée de la source lumineuse.

12. Unité de source lumineuse selon la revendication 10, dans laquelle la taille des saillies (14) augmente en direction de la position plus éloignée de la source lumineuse.

13. Unité de source lumineuse selon la revendication 10, dans laquelle les sections des saillies (14) du guide de lumière de type barre dont les parties supérieures sont plates sont sensiblement trapézoïdales.

14. Unité de source lumineuse selon la revendication 10, dans laquelle les sections des saillies (14) du guide de lumière de type barre sont cunéiformes.

15. Unité de source lumineuse selon la revendication 10, dans laquelle l'angle d'inclinaison des pentes des saillies du guide de lumière de type barre est fixé de manière à se trouver dans la plage de 40° à 60°.
